(19) Europäisches Patentamt / European Patent Office / Office européen des brevets

(11) **EP 4 068 267 A1**

(12) **EUROPEAN PATENT APPLICATION**
published in accordance with Art. 153(4) EPC

(43) Date of publication:
**05.10.2022 Bulletin 2022/40**

(21) Application number: **20893491.9**

(22) Date of filing: **12.11.2020**

(51) International Patent Classification (IPC):
**G09G 5/00** $^{(2006.01)}$ **H04N 21/2343** $^{(2011.01)}$
**H04N 21/239** $^{(2011.01)}$

(52) Cooperative Patent Classification (CPC):
**G09G 5/00; H04N 21/2343; H04N 21/239**

(86) International application number:
**PCT/JP2020/042200**

(87) International publication number:
**WO 2021/106590 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.11.2019 JP 2019212894**

(71) Applicant: **Sony Group Corporation**
**Tokyo 108-0075 (JP)**

(72) Inventors:
• **TANAKA Ken**
**Tokyo 108-0075 (JP)**
• **AIO Kosuke**
**Tokyo 108-0075 (JP)**

(74) Representative: **D Young & Co LLP**
**120 Holborn**
**London EC1N 2DY (GB)**

(54) **VIDEO TRANSMISSION DEVICE AND DISPLAY DEVICE**

(57) The technology relates to an image transmission apparatus and a display apparatus configured to wirelessly transmit an image based on a state of the display apparatus from an image transmission apparatus and reduce the processing capacity of the display apparatus.

Multiple different pieces of converted image information are generated by converting image information on the basis of inertial information transmitted from the display apparatus, and the generated multiple different pieces of converted image information are transmitted to the display apparatus using multiple beams different from each other. The technology is applicable to devices such as game consoles, personal computers, and portable devices.

[ FIG. 6 ]
FIG. 6

**Description**

Technical Field

The technology relates to an image transmission apparatus and a display apparatus, in particular, an image transmission apparatus and the display apparatus that wirelessly transmit an image based on a state of a display apparatus from the image transmission apparatus to the display apparatus.

Background

PTL 1 discloses a technique of correcting an image in a head mounted display (HMD) in real time using an inertial sensor accommodated in the HMD when a moving distance of the HMD exceeds a predetermined threshold.

Citation List

Patent Literature

[PTL]

[PTL 1] Japanese Unexamined Patent Application Publication (Translation of PCT Application) No. 2018-503114

Summary of the Invention

Problems to be Solved by the Invention

To reduce the weight and size of a display apparatus such as an HMD, it is desired to reduce the processing capacity required for the display apparatus.
The technology was made in view of such a circumstance. In the technology, image based on a state of the display apparatus is wirelessly transmitted from an image transmission apparatus to reduce the processing capacity of the display apparatus.

Means for Solving the Problem

An image transmission apparatus according to a first aspect of the technology includes: an image generator that generates multiple different pieces of converted image information by converting image information on the basis of inertial information transmitted from a display apparatus; and a wireless communicator that transmits the multiple different pieces of converted image information generated by the image generator to the display apparatus using multiple beams different from each other.
In the image transmission apparatus according to the first aspect of the technology, the multiple different pieces of converted image information are generated by converting image information on the basis of the inertial information transmitted from the display apparatus. The generated multiple different pieces of converted image information are transmitted to the display apparatus using multiple beams different from each other.
A display apparatus according to a second aspect of the technology includes: a wireless communicator that demodulates one of multiple beams coming from an image transmission apparatus; a display that displays image information obtained as a result of demodulation of the beam by the wireless communicator; a positioning module that acquires inertial information through measurement; and an inertial information communicator that transmits the inertial information acquired by the positioning module to the image transmission apparatus.
In the display apparatus according to the second aspect of the technology, one of the multiple beams coming from the image transmission apparatus is demodulated, and the image information obtained as a result of demodulation is displayed. The inertial information is acquired through measurement, and the acquired inertial information is transmitted to the image transmission apparatus.

Brief Description of the Drawings

[FIG. 1] FIG. 1 is a block diagram illustrating an exemplary configuration of an information processing system according to one embodiment to which the technology is applied.

[FIG. 2] FIG. 2 is a block diagram illustrating a first configuration example of a computer illustrated in FIG. 1.

[FIG. 3] FIG. 3 is a block diagram illustrating a second configuration example of the computer illustrated in FIG. 1.

[FIG. 4] FIG. 4 is a block diagram illustrating an exemplary configuration of an HMD illustrated in FIG. 1.

[FIG. 5] FIG. 5 is a sequence diagram illustrating an exemplary outline of processing performed by the information processing system according to Embodiment 1.

[FIG. 6] FIG. 6 is a diagram illustrating a state in which the multiple pieces of encoded information corresponding to future states of the HMD estimated by the computer are transmitted from the computer to the HMD using multiple different transmission beams.

[FIG. 7] FIG. 7 is an overall sequence diagram of the information processing system according to Embodiment 1.

[FIG. 8] FIG. 8 is a diagram illustrating a configuration example of a frame storing capability information.

[FIG. 9] FIG. 9 is a diagram illustrating an example configuration of an AoA information frame.

[FIG. 10] FIG. 10 is a flowchart illustrating exemplary processing of beam configuration performed by a computer in a phase P2 when the computer starts the beam configuration in the phase P2 (when the computer sends a setup request to the HMD).

[FIG. 11] FIG. 11 is a flowchart illustrating a method of determining valid beams (and the number of beams) to be used in multi-beam transmission in a phase P3 in Step S44 of FIG. 10.

[FIG. 12] FIG. 12 is a flowchart illustrating exemplary processing performed by the HMD when the computer starts the beam configuration in the phase P2 (when the computer sends the setup request to the HMD).

[FIG. 13] FIG. 13 is a flowchart illustrating exemplary processing of beam configuration performed by the computer when the HMD starts the beam configuration in the phase P2 (when the HMD sends the setup request to the computer).

[FIG. 14] FIG. 14 is a flowchart illustrating exemplary processing performed by the HMD when the HMD starts the beam configuration in the phase P2 (when the HMD sends the setup request to the computer).

[FIG. 15] FIG. 15 is a diagram illustrating a configuration example of an ack frame.

[FIG. 16] FIG. 16 is a flowchart illustrating exemplary processing performed by the computer in the multi-beam transmission in the phase P3.

[FIG. 17] FIG. 17 is a flowchart illustrating exemplary processing performed by the HMD in the multi-beam transmission in the phase P3.

[FIG. 18] FIG. 18 is a diagram illustrating an outline of processing of Embodiment 2 performed by the information processing system 11.

[FIG. 19] FIG. 19 is an overall sequence diagram of the information processing system 11 in Embodiment 2.

[FIG. 20] FIG. 20 is a flowchart illustrating a method of determining beams and the number of beams to be used for simultaneous transmission in the image transmission in the phase P3 according to Embodiment 2.

[FIG. 21] FIG. 21 is a block diagram illustrating a configuration example of hardware in the computer that executes a series of processes using programs.

Modes for Carrying Out the Invention

Some embodiments of the technology will now be described with reference to the drawings.

<<System Configuration>>

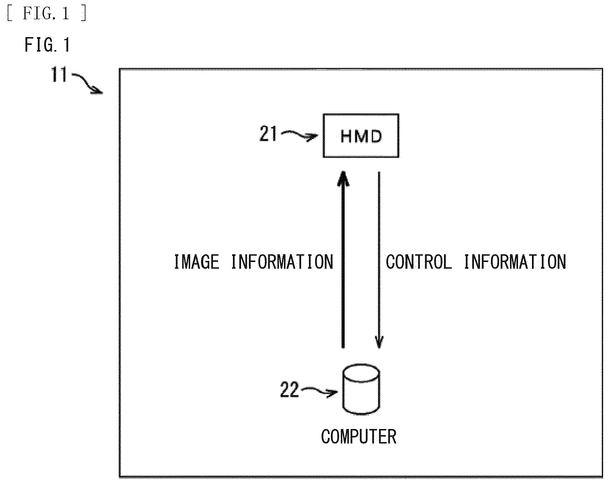

FIG. 1 is a block diagram illustrating an exemplary configuration of an information processing system according to one embodiment to which the technology is applied.

In FIG. 1, an information processing system 11 includes a head mounted display (HMD) 21 and a computer 22.

The HMD 21 is a portable device to be mounted around a head. The HMD 21 has a display at a portion close to both eyes of a user. The display displays image based on a state of the user.

The computer 22 generates image information (picture information) to be displayed on the HMD 21 and transfers the image information to the HMD 21. The HMD 21 is coupled to the computer 22 via wireless transmission.

The HMD 21 wirelessly transmits control information including inertial information, and the computer 22 generates image to be displayed on the HMD 21 on the basis of the control information transmitted from the HMD 21. The image information and the control information may be transmitted via the same or different wireless communication methods. For example, a communication method in accordance with a wireless standard using a 60 GHz band is used for wireless transmission of image information that requires a high transmission rate, whereas a communication method in accordance with a wireless standard such as Bluetooth (registered trademark) for wireless transmission of the control information that only requires a low transmission rate.

It is to be noted that the computer 22 may be any versatile or dedicated computer. For example, the computer 22 may be, but not limited to, a game console, a personal computer, or a portable device. A part of the computer 22, e.g., a part of the computer 22 not for establishing a wireless communication with the HMD 21, may be provided in a remote location distant from the HMD 21, as with the case of a server or a computer in a data center connected to the HMD 21 via a network such as the internet. Alternatively, the part of the computer 22 may be constructed by computing service (e.g., cloud service) provided via a network.

<<Configuration of Computer>>

<First Configuration Example>

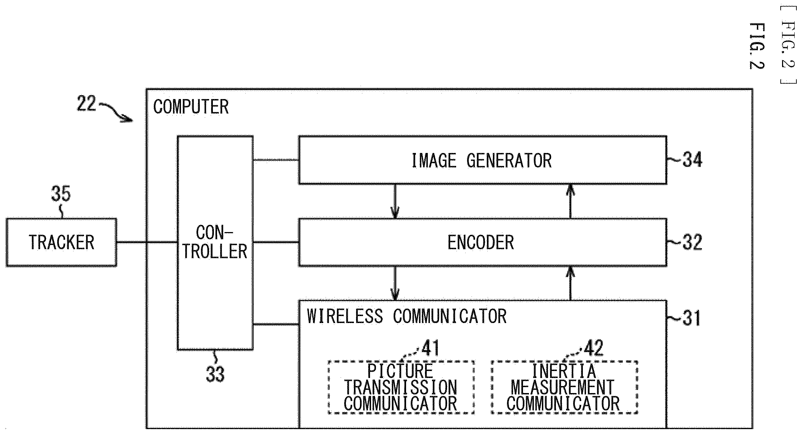

FIG. 2 is a block diagram illustrating a first configuration example of the computer illustrated in FIG. 1. The computer 22 includes a wireless communicator 31, an encoder 32, a controller 33, an image generator 34, and a tracker 35.

The wireless communicator 31 wirelessly communicates with the HMD 21. The wireless communicator 31 includes a picture transmission communicator 41 and an inertia measurement communicator 42.

The picture transmission communicator 41 wirelessly communicates with the HMD 21 using one or more beams (multiple beams). The beams indicate directivity of radio waves and are dynamically formed by a phase shifter or digital calculation. Additionally, the picture transmission communicator 41 generates multiple beams having different radiation directions and sends different pieces of image information using the respective beams.

For example, image information (picture information) to be displayed on the HMD 21 is transmitted from the picture transmission communicator 41 to the HMD 21. Additionally, for example, control information necessary to set the beams of the picture transmission communicator 41 may be transmitted from the picture transmission communicator 41 to the HMD 21 or from the HMD 21 to the picture transmission communicator 41.

The inertia measurement communicator 42 acquires the inertial information obtained by a plurality of inertial sensors provided in the HMD 21 from the HMD 21 (an inertial measurement communicator 92 described below) via a wireless communication.

The encoder 32 encodes image information generated by the image generator 34.

The controller 33 comprehensively controls the entire computer 22. Additionally, the controller 33 supplies information necessary to generate the image information to the image generator 34. Further, when the image information encoded by the encoder 32 is transmitted from the picture transmission communicator 41 of the wireless communicator 31 to the HMD 21, the controller 33 determines which beam is to be used to transmit the image information among the multiple beams generated by the picture transmission communicator 41, for example.

On the basis of the information supplied from the controller 33, the image generator 34 generates or perform rendering on the image information to be displayed on the HMD 21. The image generator 34 converts and corrects the generated image information on the basis of the latest inertial information. Thereafter, the image generator 34 supplies the converted image information to the encoder 32.

The tracker 35 is used to determine a position of the HMD 21. For example, the tracker 35 may be implemented by, but not limited to, a camera, a light detection and ranging (LiDAR), or a radar. The tracker 35 is not necessarily an essential component.

Here, the image generator 34 visualizes information regarding an object or graphics received as three-dimensional graphic numeric data from the controller 33 or another entity having image information through rendering. Thereafter, the image generator 34 further converts (corrects) the image information visualized through rendering into image information based on (corresponding to) a future state of the HMD 21.

It is to be noted that the image information visualized by the image generator 34 through rendering is referred to as original image information, the image information acquired by converting the image information visualized through rendering on the basis of the future state of the HMD 21 is referred to as converted image information, and the image information acquired by encoding the image information received from the image generator 34 (i.e., the converted image information) by the encoder 32 is referred to as encoded information. Although all of them are image information, these terms "original image information", "converted image information", and "encoded information" are used to differentiate the image information as needed.

The phrase "future state of the HMD 21" refers to the state of the HMD 21 in the future after the time when the image generator 34 converts the original image information into the converted image information. Additionally, the phrase "future state of the HMD 21" refers to the state of the HMD 21 at the time when the HMD 21 receives the encoded information originated from the original image information. The future state of the HMD 21 includes, for example but not limited to, a position or an attitude of the HMD 21.

The controller 33 estimates, as the future state of the HMD 21, the position and attitude of the HMD 21 in the future as the future states of the HMD 21 on the basis of the inertial information transmitted from the HMD 21, for example. Additionally, the controller 33 estimates, as the future states of the HMD 21, a plurality of orientations of the HMD 21 (directions in which the HMD 21 faces) with a margin because it is difficult for the controller 33 to accurately estimate a rotational movement of the HMD 21, for example.

Thereafter, the image generator 34 generates the converted image information corresponding each of the plurality of future states of the HMD 21 estimated by the controller 33, i.e., the states of the HMD 21 facing in different directions. Alternatively, the future states of the HMD 21 may be estimated by the image generator 34.

<Second Configuration Example>

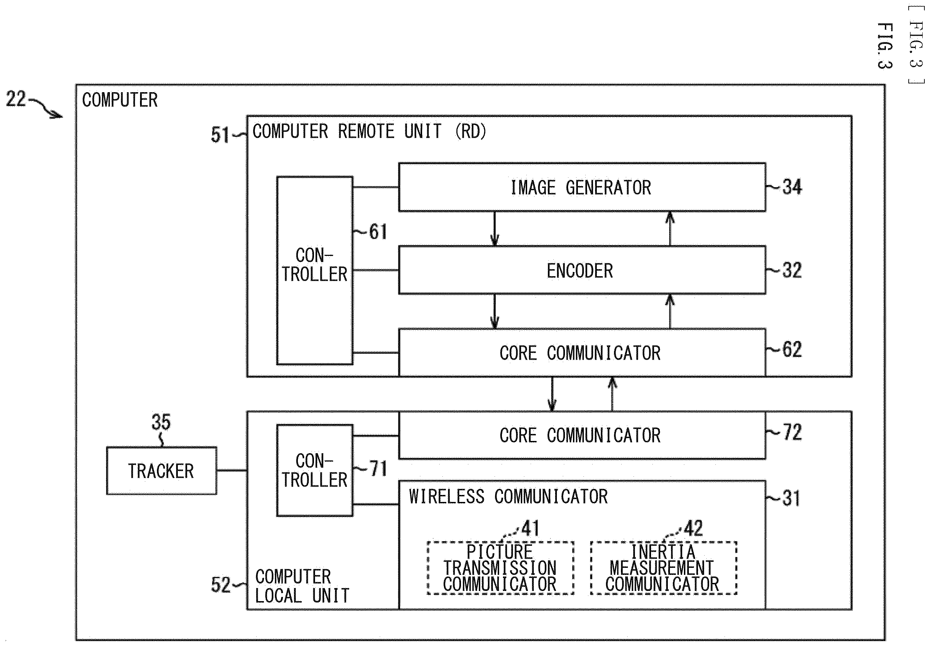

FIG. 3 is a block diagram illustrating a second configuration example of the computer 22 illustrated in the FIG. 1. It is to be noted that components corresponding to those of the computer 22 according to the first configuration example illustrated in FIG. 2 are denoted by the same reference numerals to omit descriptions thereof.

The computer 22 illustrated in FIG. 3 includes a computer remote unit 51 and a computer local unit 52. The computer remote unit 51 includes the encoder 32, the image generator 34, a controller 61, and a core communicator 62. The computer local unit 52 includes the wireless communicator 31, the tracker 35, a controller 71, and a core communicator 72.

Accordingly, the computer 22 illustrated in FIG. 3 is identical to the computer 22 illustrated in FIG. 2 in having the wireless communicator 31, the encoder 32, the image generator 34, and the tracker 35. However, the computer 22 illustrated in FIG. 3 differs from the computer 22 illustrated in FIG. 2 in being separated into the computer remote unit 51 and the computer local unit 52, having the controller 61 and the controller 71 in place of the controller 33 of FIG. 2, and additionally having the core communicator 62 and the core communicator 72.

For example, the computer remote unit 51 is a device provided in a remote area distant from the HMD 21, and has a rendering function. The computer remote unit 51 may be, but not limited to, a server connected to the HMD 21 via a network such as the internet. Alternatively, the computer remote unit 51 is not necessarily provided in an area distant from the HMD 21.

The computer local unit 52 is provided relatively close to the HMD 21. For example, the computer local unit 52 and the HMD 21 may be provided in the same building. As a representative component of the computer 22, the computer local unit 52 wirelessly communicates directly with the HMD 21. The computer local unit 52 may be, for example but not limited to, an access point or a cellular base station of a wireless local area network (LAN).

The controller 61 comprehensively controls the entire computer remote unit 51. Further, the controller 61 performs substantially the same processing as that of the controller 33 in FIG. 2. However, the controller 61 differs from the controller 33 in FIG. 2 in controlling the core communicator 62 and controlling the wireless communicator 31 in the computer local unit 52 and the tracker 35 via the controller 71 in the computer local unit 52.

The controller 71 comprehensively controls the entire computer local unit 52. Further, the controller 71 controls the wireless communicator 31 and the tracker 35 in cooperation with the controller 61 in the computer remote unit 51.

The core communicator 62 and the core communicator 72 communicate with each other to transmit information, such as the image information and the inertial information, between the computer remote unit 51 and the computer local unit 52. The transmission of the information between the core communicator 62 and the core communicator 72 may be, for example but not limited to, wired transmission such as fiber-optic transmission or wireless transmission.

<<Configuration of HMD 21>>

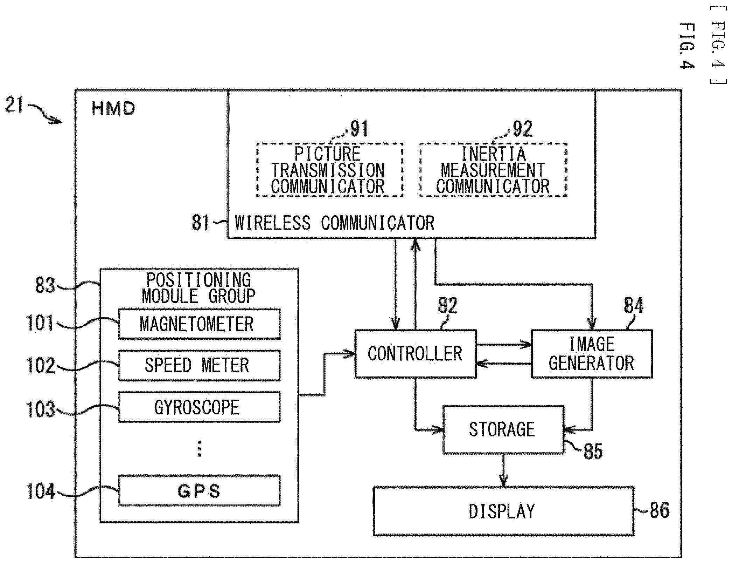

FIG. 4 is a block diagram illustrating an exemplary configuration of the HMD 21 in FIG. 1. The HMD 21 includes a wireless communicator 81, a controller 82, a positioning module group 83, an image generator 84, a storage 85, and a display 86.

The wireless communicator 81 wirelessly communicates with the wireless communicator 31 in the computer 22 (see FIGs. 2 and 3). The wireless communicator 81 includes a picture transmission communicator 91 and an inertia measurement communicator 92.

The picture transmission communicator 91 has antennas that send and receive radio waves. The picture transmission communicator 91 appropriately combines signals by using the plurality of antennas via a phase shifter or numerical operation to form a beam having high receiving sensitivity in a desired direction. Further, the picture transmission communicator 91 generates beams using the antennas having directivity, and sends various pieces of information to the picture transmission communicator 41 of the wireless communicator 31 in the computer 22 (see FIGs. 2 and 3) using the beams.

Further, the picture transmission communicator 91 forms a beam to demodulate at least one beam emitted from the picture transmission communicator 41 in the computer 22, e.g., only a beam coming from the direction in which the HMD 21 faces (or a beam having the largest reception power). The picture transmission communicator 91 receives the image information (encoded information) transmitted by the beam, and supplies the image information to the image generator 84. Further, the picture transmission communicator 91 and the picture transmission communicator 41 in the computer 22 exchanges control information necessary to set beams or other information therebetween.

The inertia measurement communicator 92 sends the inertial information acquired by the plurality of inertial sensors provided mainly in the HMD 21 to the inertia measurement communicator 42 of the computer 22 (see FIGs. 2 and 3).

The controller 82 comprehensively controls the entire processing performed by the HMD 21. For example, the controller 82 supplies the inertial information regarding three-dimensional position and attitude of the HMD 21 acquired by the positioning module group 83 to the wireless communicator 81, and causes the inertia measurement communicator 92 to send the inertial information to the computer 22.

The positioning module group 83 acquires the information regarding three-dimensional position, attitude, and movement (e.g., angular speed) of the HMD 21 (i.e., the inertial information). The positioning module group 83 may include, for example but not limited to, a magnetometer 101, a speed meter 102, a gyroscope 103, and a global positioning system (GPS) 104. It is to be noted that the inertial information may be any information indicating a state of the HMD 21.

The image generator 84 acquires the image information transmitted from the computer 22 and received by the picture transmission communicator 91 of the wireless communicator 81. The image generator 84 decodes the image information (encoded information) encoded by the encoder 32 of the computer 22 (see FIGs. 2 and 3), performs rendering processing, and supplies the resultant information to the storage 85.

The storage 85 temporarily stores the image information received from the image generator 84 under the control of the controller 82, and supplies the stored image information to the display 86.

The display 86 displays the image information received from the storage 85 on the screen.

It is to be noted that the arrangements of the components in the HMD 21 in FIG. 4 are mere examples. For example, the image generator 84 and the storage 85 may be provided at different positions.

<<Embodiment 1>>

Embodiment 1 of the information processing system 11 including the computer 22 according to the second configuration example illustrated in FIG. 3 will now be described in detail. It is to be noted that Embodiment 2 corresponds to the information processing system 11 including the computer 22 according to the first configuration example illustrated in FIG. 2.

As compared with Embodiment 1, Embodiment 2 differs from Example 1 in the following point: The processes separately performed by the computer remote unit 51 and the computer local unit 52 of the computer 22 in Embodiment 1 are performed by the single computer 22 in Embodiment 2.

Embodiment 2 differs from Embodiment 1 also in the following point: The transmission of information between the computer remote unit 51 and the computer local unit 52 is achieved by the core communicator 62 and the core communicator 72 communicating with each other in Embodiment 1, whereas the communication achieved in Embodiment 1 is not necessary for the transmission of information inside the computer 22 in Embodiment 2.

Except these differences, substantially common processes are performed in Embodiment 1 and Embodiment 2. Accordingly, only the processing in Embodiment 1 is described in detail, and the processing in Embodiment 2 is described briefly.

<Outline of Processing in Embodiment 1>

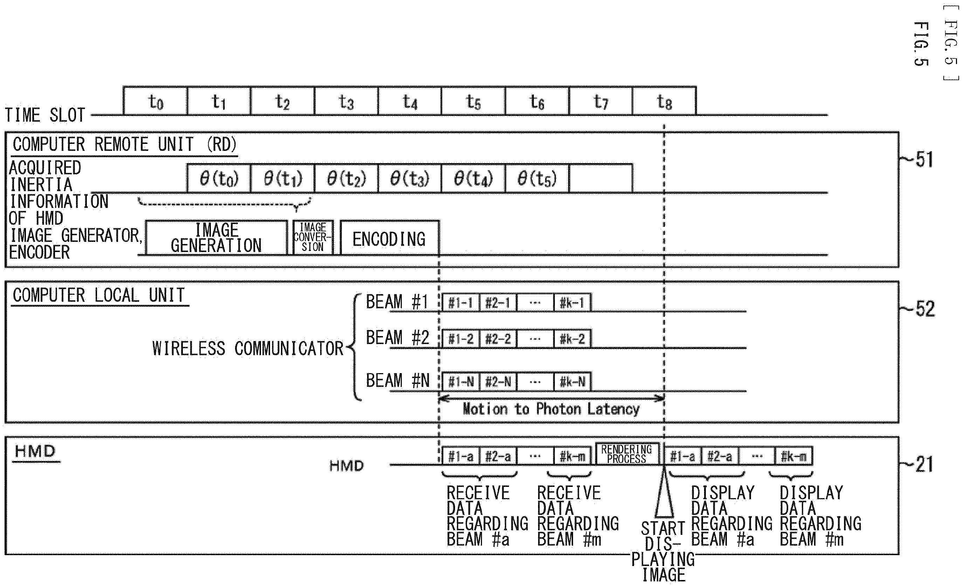

FIG. 5 is a sequence diagram illustrating an exemplary outline of the processing in Embodiment 1 performed by the information processing system 11.

In FIG. 5, a time axis (horizontal axis) is sectioned into time slots at a constant time interval, and the time slots are represented by time t0, t1, t2, and so on.

FIG. 5 illustrates timings of various processes performed by the computer remote unit 51, the computer local unit 52, and the HMD 21 along the time axis.

The image generator 34 in the computer remote unit 51 visualizes the three-dimensional graphic numerical data received from the controller 61 by rendering, and generates the original image information, which is original information of the image information to be displayed on the HMD 21, within a period of time from the time t0 to the time t2. Thereafter, the image generator 34 then converts the generated original image information into the converted image information based on the state of HMD 21 in future time t5. The conversion into the converted image information involves, for example but not limited to, trapezoid transformation of an image (a picture) by utilizing a rotation of the HMD 21.

The phrase "the state of the HMD 21 in the time t5" refers to the future state of the HMD 21 estimated when the HMD 21 receives the encoded information generated in a process on the original image information after the generation of the original information by the image generator 34 in the time t2.

Further, the period of time from the time t2 to the time t5 depends on the processing time (including the time for transmitting the image information) of the process on the original image information after the generation of the original image information by the image generator 34 in the time t2.

The controller 61 may, although not limited to, preliminarily calculate the time from the generation of the original image information by the image generator 34 to reception of the encoded information originated from the original image information by the HMD 21.

For example, the controller 61 may measure the time for transmitting the image information on the basis of response information at an appropriate timing at the start or after the end of the wireless communication between the computer 22 and the HMD 21. The response information is information that the HMD 21 sends back to the computer 22 when the HMD 21 receives the encoded information originated from the original image information generated by the image generator 34.

The time t5 in FIG. 5 is exemplary time determined by adding the time for transmitting the image information to the time 2 in which the image generator 34 generates the original image information. The HMD 21 may receive the encoded information originated from the original image information at time other than the time t5.

In the time t2 in which the image generator 34 generates the original image information, the controller 61 estimates a plurality of future states of the HMD 21, i.e., a plurality of states of the HMD 21 facing in different directions, in the time t5 on the basis of the most recent (latest) inertial information $\theta(t)$ (where t denotes the time before the time t1) that the controller 61 has already received from the HMD 21. The controller 61 then supplies the plurality of estimated future states of the HMD 21 to the image generator 34. The inertial information $\theta(t)$ refers to the inertial information measured by the positioning module group 83 in the HMD 21 at time t. It is to be noted that the plurality of future states of the HMD 21 may be estimated by the image generator 34.

The image generator 34 performs image conversion of the original image information to generate the converted image information based on each of the plurality of future states of the HMD 21 in the time t5, i.e., the estimated states of the HMD 21 at the time of reception of the image information based on the inertial information $\theta(t)$.

The encoder 32 encodes each pieces of the converted image information generated by the image generator 34 and corresponding to each of the plurality of future states of the HMD 21 into a plurality of pieces of encoded information in a separate manner, and sends the pieces of encoded information to the wireless communicator 31 of the computer local unit 52. The pieces of encoded information are transmitted to the computer local unit 52 via the core communicator 62 and the core communicator 72 (see FIG. 3).

The wireless communicator 31 (or the picture transmission communicator 41) in the computer local unit 52 generates multiple beams #1 to #N (where N is 2 or greater) each having directivity, and sends the plurality pieces of encoded information received from the encoder 32 to the HMD 21 using the beams #1 to #N. The N in the phrase "beams #1 to #N" corresponds to the number of pieces of the encoded information supplied from the encoder 32, and the number of the plurality of future states of the HMD 21 estimated by the controller 61. Additionally, N is equal to or less than the maximum number of beams that the wireless communicator 31 is able to generate. Additionally, the beams #1 to #N are reference signs respectively allocated to N beams selected from the beams that the wireless communicator 31 is able to generate.

The beams #1 to #N are emitted from the wireless communicator 31 in different radiation directions. Further, the beams #1 to #N may be reflected by, for example, a wall and then reaches the position of the HMD 21. Further, the beams #1 to #N arrive at the position of the HMD 21 from different directions of arrival. Accordingly, the reception power of the beams received at the wireless communicator 81 (or the picture transmission communicator 91, see FIG. 4) in the HMD 21 vary depending on the orientation of the HMD 21 (i.e., the direction in which the HMD 21 faces). This generates differences in reception power of the beams.

Among the beams that the wireless communicator 31 is able to emit, the controller 61 in the computer remote unit 51 allocates the beams for transmission (hereinafter referred to as transmission beams) to the respective pieces of encoded information. For example, in a case where each of the plurality of estimated future states of the HMD 21 is assumed, the controller 61 allocates a transmission beam coming from a direction closest to the direction in which the reception power at the HMD 21 is maximum in the assumed state (i.e., the beam receivable in the assumed state) as the transmission beam for transmitting the encoded information generated on the basis of the assumed state. It is to be noted that the information indicating the allocation of the transmission beams to the respective pieces of encoded information is referred to as beam allocation information.

Thereafter, the controller 61 supplies the beam allocation information to the wireless communicator 31 via the controller 71 in the computer local unit 52.

The wireless communicator 31 sends the plurality pieces of encoded information received from the encoder 32 from the picture transmission communicator 41 to the HMD 21 using the respective transmission beams on the basis of the beam allocation information received from the controller 61.

It is to be noted that the picture transmission communicator 41 sends each of the pieces of encoded information to the HMD 21 using the transmission beams allocated to the piece of encoded information on the basis of each of the pieces of encoded information.

Encoded information #i-j in the computer local unit 52 refers to an i-th frame of the encoded information transmitted by a transmission beam j (where j denotes 1 to N). The term "frame" refers to the unit of image information or picture information which is divided into segments when transmitted.

The wireless communicator 31 may repeatedly send the encoded information #i-j (where i denotes 1 to k), which is generated by encoding the converted image information for one screen of image to be displayed on the HMD 21, to the HMD 21 by the same transmission beam on a frame basis until new encoded information is supplied from the encoder 32.

It is to be noted that, in the example illustrated in FIG. 5 in which k frames are transmitted to the HMD 21 for each pieces of the encoded information, k may be a number preliminarily determined or the possible number of frames repeatedly transmitted until new encoded information is supplied from the encoder 32 to the wireless communicator 31.

The picture transmission communicator 91 of the wireless communicator 81 in the HMD 21 (see FIG. 4) forms beams (hereinafter referred to as reception beams) each having large reception power in a particular direction using the plurality of antennas. For example, the picture transmission communicator 91 generates a reception beam having such directivity that reception power is maximized with respect to the transmission beam coming from the direction in which the HMD 21 faces. It is to be noted that the HMD 21 forms the reception beam so that a gain the same as a gain generated in a desired direction is not generated in directions other than the desired direction.

Among the multiple transmission beams #1 to #N emitted from the wireless communicator 31 (the picture transmission communicator 41) of the computer local unit 52, the picture transmission communicator 91 receives only the encoded information transmitted by the transmission beam of the computer local unit 52 that causes maximum reception power when received by the reception beam formed by the HMD 21. However, optimal encoded information may be selected after the plurality of pieces of encoded information is received.

That is, among the plurality of future states of the HMD 21 in the time t5 estimated by the controller 61 of the computer remote unit 51, the encoded information corresponding to the state closest to the actual state of the HMD 21 in the time t5 is transmitted to the HMD 21 by the transmission beam coming from the direction closest to the reception beam of the HMD 21. The wireless communicator 81 of the HMD 21 receives, for example, the transmission beam having the largest reception power among the transmission beams reaching the picture transmission communicator 91, and demodulates the encoded information transmitted by the beam.

In FIG. 5, the wireless communicator 81 in the HMD 21 sequentially receives two frames, i.e., encoded information #1-a and #2-a that are transmitted by a beam #a among the beams #1 to #N emitted from the wireless communicator 31 of the computer local unit 52 in the time t5. Further, the wireless communicator 81 continues to receive encoded information until time t7.

Since the state of the HMD 21 changes from the time t5 to the time t7, FIG. 5 illustrates an example in which the wireless communicator 81 receives encoded information #k-m transmitted by a beam #m different from the beam #a until the time t7.

The encoded information received by the wireless communicator 31 is subjected to a rendering process such as a decoding process at the image generator 84 in FIG. 4, and the converted image information before being encoded by the encoder 32 of the computer remote unit 51 is temporarily stored in the storage 85. Thereafter, the image information stored in the storage 85 is displayed on the display 86 from the time t8 when the rendering process of the encoded information received between the time t5 and the time t7 is completed.

It is to be noted that, in the HMD 21, the rendering process may be performed every time the encoded information for one frame is received, and the reception of the encoded information and the rendering process may be performed in parallel. Also, although the controller 61 of the computer remote unit 51 (see FIG. 3) estimates the plurality of future states of the HMD 21 in the time t5 in Embodiment 1, the controller 61 may estimate a plurality of states of the HMD 21 in the period of time from the time t5 when the wireless communicator 31 of the HMD 21 starts receiving the encoded information to the time t7 when the image generator 84 begins the rendering process.

In FIG. 5, motion-to-photon latency in the period from the time t5 when the HMD 21 starts receiving the encoded information from the computer local unit 52 to the time t8 when the HMD 21 starts displaying the image information of the encoded information on the display 86 represents a delay time relating to the displaying. The motion-to-photon latency is generally the sum of a transmission delay and a rendering delay. In a case where the HMD 21 in the time t5 estimated by the computer remote unit 51 or the computer local unit 52 matches with the actual state of the HMD 21 in the time t5, the latency that the user experiences when the image is displayed on the display 86 of the HMD 21 corresponds to the motion-to-photon latency. In other words, the motion-to-photon latency means the minimum value of the latency that the user experiences.

If the technology is not applied, the image generator 34 of the computer remote unit 51 performs image conversion in the time t2 to generate the converted image information corresponding to the state of the HMD 21 in the time t1 on the basis of inertial information θ(t1) without estimating the future states of the HMD 21. Therefore, the period of time from the time t1 when the inertial information θ(t1) is acquired to the time t8 when the image information is displayed is the delay time relating to the displaying.

Therefore, the delay time relating to the displaying is greatly reduced by applying the technology, as compared with the case where the technology is not applied.

In addition, since the HMD 21 receives the image information based on its state, there is no need for the HMD 21 to correct the image information. This reduces the processing capacity of the HMD 21. Therefore, it is possible to reduce the size, weight, and cost of the HMD 21.

In addition, the HMD 21 receives the image information based on the state of the HMD 21 by receiving the image information (the encoded information) of the transmission beam coming from the direction closest to the direction in which the reception beam is basically oriented among the multiple transmission beams simultaneously transmitted from the computer 22. Therefore, there is no need to select a beam, which prevents the processing capacity from increasing.

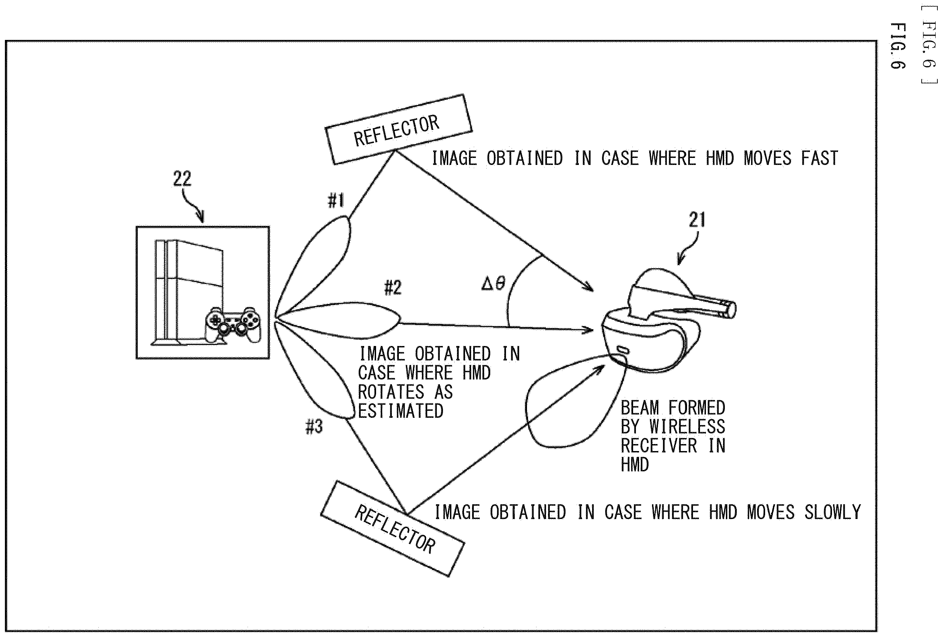

FIG. 6 is a diagram illustrating a state in which the plurality of pieces of encoded information corresponding to the future states of the HMD 21 estimated by the computer 22 are transmitted from the computer 22 to the HMD 21 by multiple different transmission beams.

In FIG. 6, beams # 1 to # 3 indicate some of the multiple transmission beams emittable from the picture transmission communicator 41 of the wireless communicator 31 in the computer 22 (see FIG. 3). These beams # 1 to # 3 come from different directions with respect to the HMD 21.

The beam #2 indicates a transmission beam directly reaching the HMD 21 from the picture transmission communicator 41 of the computer 22 directly, and the beam #1 and the beam #3 indicate transmission beams reaching the HMD 21 via reflections at reflectors such as walls.

Assuming that the direction of arrival of the angle of arrival of the transmission beam with respect to the direction in which the HMD 21 faces is an angle of arrival (AoA), the AoA of the transmission beam directly reaching the HMD 21 from the computer 22 becomes 0 degree in a state where the computer 22 (or an object regarded as the computer 22) is directly opposed to the HMD 21.

Meanwhile, when viewed in the direction in which the HMD 21 faces, the AoA of a beam reaching the HMD 21 at an angle of $\Delta\theta$ in the clockwise direction is assumed to be $\Delta\theta$, and the AoA of a transmission beam reaching the HMD 21 at an angle of $\Delta\theta$ in the counterclockwise direction is assume to be $-\Delta\theta$. For example, when the AoA of the beam #2 is 0° in FIG. 6, the AoA of the beam # 1 is $\Delta\theta$, and the AoA of the beam # 3 is $-\Delta\theta$.

Now, the antennas of the picture transmission communicator 91 of the wireless communicator 81 in the HMD 21 (see FIG. 4) are oriented in such a direction that the reception power of the beam # 3 among the beams #1 to #3 is maximum. That is, the reception beam of the HMD 21 is along the direction in which the HMD 21 faces and oriented in such a direction that the reception power of the beam at the antennas of the picture transmission communicator 91 is maximum. In this case, the direction in which the HMD 21 faces is directed at the AoA ($-\Delta\theta$) of the beam #3.

This state is established in the time t1 illustrated in FIG. 5. In the time t1, the inertial information $\theta(t1)$ of the HMD 21 is transmitted from the inertia measurement communicator 92 (see FIG. 4) of the wireless communicator 81 of the HMD 21 to the inertia measurement communicator 42 (see FIG. 3) of the wireless communicator 31 of the computer 22. Thereafter, the controller 61 (see FIG. 3) of the computer remote unit 51 acquires the inertial information $\theta(t1)$ in the time t2.

In the time t2 in which the image generator 34 of the computer 22 generates the original image information by rendering, the controller 61 of the computer 22 estimates the plurality of future states of the HMD 21 in the time t5 on the basis of the most recent (latest) inertial information $\theta(t)$ (where t is time before t1) that has been already acquired.

In a case where the HMD 21 continues its previous motion (e.g., rotation) in FIG. 6, the controller 61 estimates that the reception beam of the HMD 21 will be oriented in the direction of arrival of the beam # 2.

In contrast, in a case where the HMD 21 changes its motion to a motion (rotation) faster than the previous motion in FIG. 6, the controller 61 estimates that the reception beam of the HMD 21 will be oriented in the direction of arrival of the beam # 1.

Further, in a case where the HMD 21 changes its motion to a motion slower than the previous motion, the controller 61 estimates that the reception beam of the HMD 21 will keep oriented in the direction of arrival of the beam #3.

It is to be noted that, although the AoA of the beam #1 and the AoA of the beam #3 has the same absolute values ($\Delta\theta$) in FIG. 6, this example is not restrictive.

In this case, three states in which the reception beam formed by the HMD 21 faces in each of the directions of arrival of the beams #1 to #3 are assumed to be the future states of the HMD 21, and the image generator 34 generates the converted image information based on each of the states. The encoder 32 then converts each pieces of the converted image information corresponding to the three future states into the encoded information and supplies the encoded information to the wireless communicator 31 (see FIG. 3).

The controller 61 also supplies the beam allocation information to the wireless communicator 31 so that encoded information corresponding the state in which the reception beam of the HMD 21 is oriented in the direction of arrival of the beam #1 is transmitted by the beam #1, the encoded information corresponding the state in which the reception beam of the HMD 21 is oriented in the direction of arrival of the beam# 2 is transmitted by the beam #2, and the encoded information corresponding to the state in which the reception beam of the HMD 21 is oriented in the direction of arrival of the beam #3 is transmitted by the beam #3.

It is to be noted that the controller 61 may preliminarily recognize and store (as described later) the AoA at the HMD 21 of each transmission beam emitted from the picture transmission communicator 41 of the wireless communicator 31, and estimate a plurality of future states of the HMD 21 by considering the AoA of each transmission beam emitted from the picture transmission communicator 41, or estimate a plurality of future states of the HMD 21 regardless of the AoA of each transmission beam.

On the basis of the beam allocation information received from the controller 61, the wireless communicator 31 sends the encoded information corresponding to the state of the HMD 21 in which the reception beam of the HMD 21 is oriented in the direction of arrival of the beam #1 to the HMD 21 using the beam #1, sends the encoded information corresponding to the state of the HMD 21 in which the reception beam of the HMD 21 is oriented in the direction of arrival of the beam #2 to the HMD 21 using the beam #2, and sends the encoded information corresponding to the state of the HMD 21 in which the reception beam of the HMD 21 is oriented in the direction of arrival of the beam #3 to the HMD 21 using the beam #3.

In contrast, the wireless communicator 81 of the HMD 21 receives the encoded information transmitted by the transmission beam of which direction of arrival is closest to the direction in which the reception beam of the HMD 21 is actually oriented in the period of time from the time t5 to time t7 in FIG. 5, or the transmission beam having the largest reception power.

For example, in a case where the HMD 21 continues the movement (rotation) performed until the time t1, the reception beam of the HMD 21 will be oriented in the direction of arrival of the beam #2 in the time t5. The wireless communicator 81 receives the encoded information transmitted using the beam #2.

In a case where the HMD 21 changes its motion (rotation) to a motion faster than the motion performed until the time t1, the reception beam of the HMD 21 is oriented in the direction of arrival of the beam #1. In this case, the wireless communicator 81 receives the encoded information transmitted by the beam #1.

In a case where the HMD 21 changes its motion to a motion slower than the motion performed until the time t1, the reception beam of the HMD 21 is kept oriented in the direction of arrival of the beam #3. In this case, the wireless communicator 81 receives the encoded information transmitted by the beam #3.

As described above, when receiving the encoded information from the computer local unit 52, the HMD 21 generates the image information (the converted image information) by performing rendering processing on the encoded information and displays the resultant information on the display 86.

<Details of Processing of Embodiment 1>

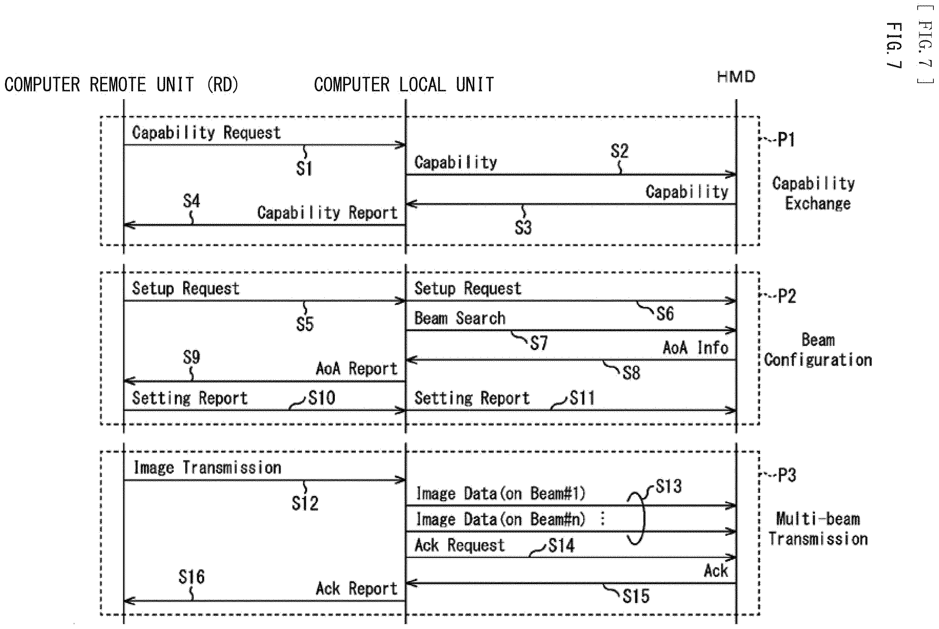

FIG. 7 is an overall sequence diagram of the information processing system 11 of Embodiment 1. In Embodiment 1, three phases are mainly assumed: capability exchange in a phase P1, beam configuration in a phase P2, and a multi-beam transmission in a phase P3. FIG. 7 illustrates data transmitted between the computer remote unit 51, the computer local unit 52, and the HMD 21 in each of the phases P1, P2, and P3.

In the capability exchange in the phase P1, the HMD 21 and the computer local unit 52 exchange information regarding whether the beam configuration in the phase P2 and the multi-beam transmission in the phase P3 are feasible.

Additionally, the computer local unit 52 notifies the computer remote unit 51 of information regarding whether the HDM 21 is able to execute the beam configuration in the phase P2 and the multi-beam transmission in the phase P3.

It is to be noted that the capability exchange in the phase P1 only has to be executed once when wireless communication between the computer 22 and the HMD 21 starts, for example.

In the beam configuration in the phase P2, the computer remote unit 51 determines transmission beams (and the number of beams) to be used to transmit the encoded information from the multiple beams emittable from the computer local unit 52 (the picture transmission communicator 41, see FIG. 3). That is, the computer remote unit 51 determines transmission beams (the number of beams) to be used in the multi-beam transmission in the phase P3.

Further, in the beam configuration in the phase P2, the HMD 21 notifies the computer remote unit 51 via the computer local unit 52 of the direction of arrival AoA at the HMD 21 of the transmission beam emittable from the computer local unit 52 (the picture transmission communicator 41, see FIG. 3) (i.e., the transmission beam to be used in the multi-beam transmission in the phase P3).

Further, in the beam configuration in the phase P2, the computer remote unit 51 notifies the HMD 21 via the computer local unit 52 of information regarding the setting of the reception sensitivity of the antennas (the directivity of the reception beams) at the HMD 21 (the picture transmission communicator 91 of the wireless communicator 81).

It is to be that, in the beam configuration in the phase P2 of FIG. 7, the computer remote unit 51 sends a setup request to the computer local unit 52 to thereby start the beam configuration in the phase P2. However, the start of the beam configuration in the phase P2 is not limited to this.

For example, in a case where it has been determined that the beam configuration in the phase P2 should be performed regularly, the setup request may not exist.

Alternatively, the setup request may be transmitted to the computer remote unit 51 and the HMD 21 upon a request from the computer local unit 52, or the setup request may be transmitted to the computer local unit 52 and the computer remote unit 51 upon a request from the HMD 21.

It is to be noted that the beam configuration in the phase P2 may not be necessarily executed prior to the multi-beam transmission in phase P3 as illustrated in FIG. 7.

In the multi-beam transmission in the phase P3, the computer remote unit 51 sends the computer local unit 52 the plurality pieces of encoded information corresponding to the plurality of future states of the HMD 21 estimated by the computer remote unit 51.

Further, the computer local unit 52 sends the pieces of encoded information to the HMD 21 using multiple different transmission beams. In addition, the HMD 21 sends the result of reception of the encoded information at the HMD 21 to the computer remote unit 51 via the computer local unit 52.

(Capability Exchange in Phase P1)

In the capability exchange in the phase P1, the computer remote unit 51 sends a capability request to the computer local unit 52 in Step S1. The capability request includes information requesting for an exchange of capability information between the computer remote unit 51 and the HMD 21 coupled to the computer local unit 52.

In Step S2, the computer local unit 52 having received the capability request sends the capability information to the HMD 21.

In Step S3, the HMD 21 having received the capability information sends the capability information to the computer local unit 52.

In Step S4, the computer local unit 52 having received the capability information sends a capability report to the computer remote unit 51.

The capability report includes information regarding the capability information of the HMD 21 received by the computer local unit 52.

It is to be noted that Step S1 and Step S2 may be performed after Step S3 and Step S4.

<Configuration Example of Frame Storing Capability Information>

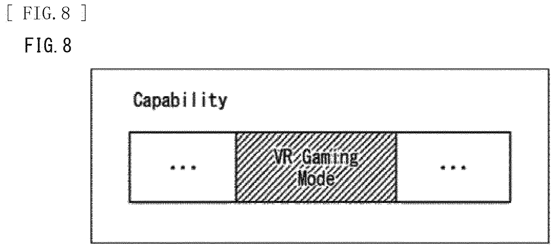

FIG. 8 illustrates a configuration example of a frame storing the capability information.

In FIG. 8, the frame used to transmit the capability information includes VR gaming mode information. The VR gaming mode information includes information indicating whether communication terminals (e.g., the computer local unit 52 and the HMD 21) used to transmit the capability information are able to execute the beam configuration in the phase P2 and the multi-beam transmission in the phase P3. For example, "1" may be represented when they are executable, while "0" may be represented when they are not executable. However, the method of representation is not limited to this example.

It is to be noted that, even after sending multiple transmission beams to the HMD 21 and receiving a reception response to only one of the transmission beams from the HMD 21, the computer local unit 52 sends the HMD 21 the capability information indicating that the beam configuration in the phase P2 and the multi-beam transmission in the phase P3 are feasible in a case where it is determined that the transmission has been completed.

The HMD 21 sends the computer local unit 52 the capability information indicating that the beam configuration in the phase P2 and the multi-beam transmission in the phase P3 are feasible in a case where, for example, a reception beam having directivity with high reception sensitivity in a particular direction, such as the direction in which the HMD 21 faces, is able to be formed (in a case where a reception beam having a high directivity gain in a specific direction of the HMD 21 is able to be generated at the transmitting/receiving antenna), and in a case where a reception beam having a high gain (reception power) is able to be demodulated when multiple transmission beams are received.

(Beam Configuration in Phase P2)

In the beam configuration in the phase P2 of FIG. 7, the computer remote unit 51 sends the setup request to the computer local unit 52 in Step S5. The setup request includes information requesting the computer local unit 52 to execute a beam search or information indicating execution of the beam search. In FIG. 7, the computer remote unit 51 sends the setup request to the computer local unit 52; however, the HMD 21 may send the beam search to the computer local unit 52.

In Step S6, the computer local unit 52 sends the setup request to the HMD 21.

In Step S7, the computer local unit 52 sends the beam search to the HMD 21. The beam search includes information for estimating the AoA at the HMD 21 of a transmission beam from the computer local unit 52 (the picture transmission communicator 41 of the wireless communicator 31).

At this time, the transmission beam emitted by the computer local unit 52 may be switched in a time division manner and sent to the HMD 21 when the computer 22 (or an object regarded as the computer 22) and the HMD 21 face each other or while the HMD 21 is rotating or moving. For example, in the beam search, information including a beam number inherent to each formed transmission beam may be transmitted.

In Step S8, the HMD 21 sends the AoA information frame to the computer local unit 52. The AoA information frame includes information indicating the direction of arrival AoA at the HMD 21 detected by the HMD 21 and the reception signal quality for each transmission beam sent from the computer local unit 52 and received by the HMD 21 in the beam search in Step S7.

<Configuration Example of AoA Information Frame>

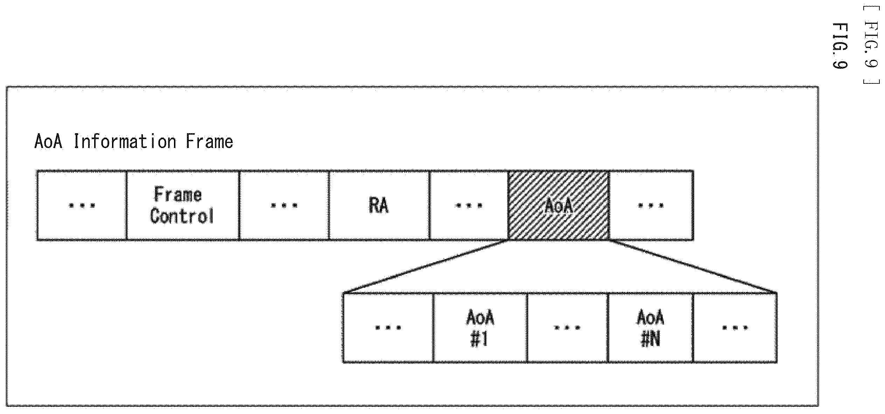

FIG. 9 is a diagram illustrating a configuration example of the AoA information frame.

The AoA information frame includes frame control information. The frame control information includes information indicating that it is an AoA request. The AoA information frame also includes RA information. The RA information includes information indicating the computer local unit 52 (the picture transmission communicator 41 of the wireless communicator 31) to which the AoA information frame is to be sent. For example, the RA information may include, but not limited to, a media access control (MAC) address.

The AoA information frame also includes AoA information. The AoA information includes the AoA of each transmission beam received by the HMD 21 in the beam search in Step S7 and information indicating the quality of received signal. As illustrated in FIG. 9, the AoA information includes the AoA of each of the beams #1 to #N, and the information indicating the quality of received signals. The AoA information may be divided into a plurality of AoA information frames before transmitted to the computer local unit 52. Alternatively, the AoA information may include information indicating whether or not the AoA information is divided into a plurality of AoA information frames.

In Step S9 of FIG. 7, the computer local unit 52 sends an AoA report to the computer remote unit 51. The AoA report includes the AoA information. When receiving the AoA report, the computer remote unit 51 (the controller 61, see FIG. 3) generates and stores information regarding a correspondence between a transmission beam emittable from the computer local unit 52 (the picture transmission communicator 41 of the wireless communicator 31) and the AoA at HMD 21 of the transmission beam, on the basis of the inertial information (not illustrated) sent from the HMD 21 to the computer remote unit 51 via the computer local unit 52 at the same time as the reception of the AoA report.

In Step S10 of FIG. 7, the computer remote unit 51 sends a setting report to the computer local unit 52 on the basis of the AoA Report.

In Step S11, the computer local unit 52 having received the setting report sends the setting report to the HMD 21.

The setting Report includes information indicating the directivity of the reception beam (the directivity of the reception beam at the transmission/reception antennas) to be set by the HMD 21 (the picture transmission communicator 91 of the wireless communicator 81, see FIG. 4) in the multi-beam transmission in the phase P3. For example, the setting report includes information requesting that the directivity of the reception beam is so set that the reception sensitivity of the reception beam is maximized in the direction in which the HMD 21 faces and that the half-width is 30°. It is to be noted that the directivity of the reception beam may be set to, for example, such directivity that any of multiple transmission beams for transmitting the encoded information from the computer local unit 52 is included within the range of the half-width, and that two or more transmission beams are not included in the range of the half-width at the same time.

It is to be noted that, in the beam configuration in the phase P2, all the data illustrated in FIG. 7 are not necessarily transmitted. For example, only the setting report may be transmitted.

Next, a description is given of processing at the computer 22 and the HMD 21 in the beam configuration in the phase P2.

<Processing Performed in Case where Computer 22 Sends Setup Request to HMD 21>

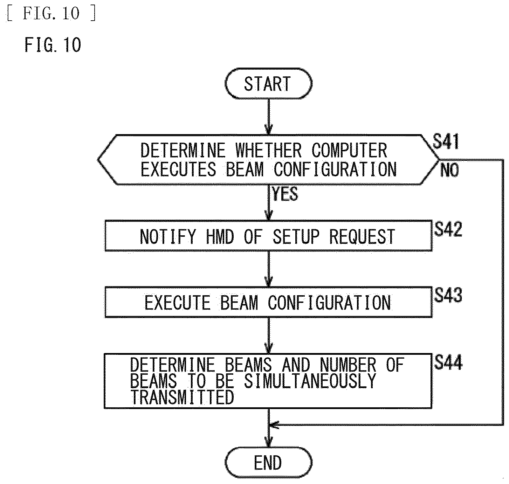

FIG. 10 is a flowchart illustrating exemplary processing of the beam configuration in the phase P2 performed by the computer 22 in a case where the computer 22 starts the beam configuration in the phase P2 (in a case where the computer 22 sends the setup request to the HMD 21).

In Step S41, the computer 22 determines whether or not the beam configuration is to be executed in the phase P2. The computer 22 determines that the beam configuration is to be executed in the phase P2 in a case where, but not limited to, the amount of change in direction of arrival of any transmission beam at the HMD 21 exceeds a predetermined threshold, or in a case where the computer 22 determines that the propagation environment of a beam between the computer local unit 52 and the HMD 21 has changed.

If it is not determined in Step S41 that the beam configuration is to be executed in the phase P2, Step S41 to Step S44 are skipped and the processing of the flowchart ends.

If it is determined in Step S41 that the beam configuration is to be executed in the phase P2, the processing proceeds from Step S41 to Step S42.

In Step S42, the computer 22 sends the setup request to the HMD 21 and notifies that the beam configuration is to be executed in the phase P2. The processing proceeds from Step S42 to Step S43.

In Step S43, the computer 22 performs the processing of the beam configuration in the phase P2. That is, the computer 22 sends the beam search to the HMD 21 and receives the AoA information frame of FIG. 9 from the HMD 21. The computer 22 acquires the AoA at the HMD 21 and the reception signal quality of each transmission beam emitted from the computer local unit 52 from the AoA information frame. The processing proceeds from Step S43 to Step S44.

In Step S44, the computer 22 determines transmission beams (and the number of beams) to be used for the multi-beam transmission in the phase P3 among the transmission beams emittable from the computer 22, on the basis of the AoA of each transmission beam obtained in Step S43. It is to be noted that the transmission beam used for the multi-beam transmission in the phase P3 is referred to as a valid beam.

For example, the computer 22 determines, as the valid beam, a transmission beam of which AoA at the HMD 21 is greater than or equal to a certain angular interval. Alternatively, the computer 22 determines, as the valid beam, a transmission beam of which AoA at the HMD 21 is greater than or equal to a certain angular interval r1 and less than or equal to a certain angular interval r2 (where r1 < r2). Still alternatively, the computer 22 may estimate a plurality of future states of the HMD 21 on the basis of the inertial information of the HMD 21 previously acquired, and determine, as the valid beam, a transmission beam coming from a direction close to the direction in which the reception beam of the HMD 21 is oriented in each of the plurality of estimated states of the HMD 21. However, the direction of the valid beam is not limited to these directions. The processing ends after Step S44.

It is to be noted that a part of the processing including Step S41 to Step S44 may be executed by the computer local unit 52, and the remaining processing may be executed by the computer remote unit 51. For example, but not limited to, the computer remote unit 51 may determine whether or not the computer 22 executes the beam configuration in the phase P2 in Step S41, and the computer local unit 52 may execute the other processing including Step S42 to Step S44.

All the processing of Step S41 to Step S44 are not necessarily performed. For example, the determination of the valid beams (and the number of beams) to be used in the multi-beam transmission in the phase P3 may not be performed in the beam configuration in the phase P2.

<Processing of Determining Valid Beams (and Number of Beams) to be Used in Multi-Beam Transmission in Phase P3>

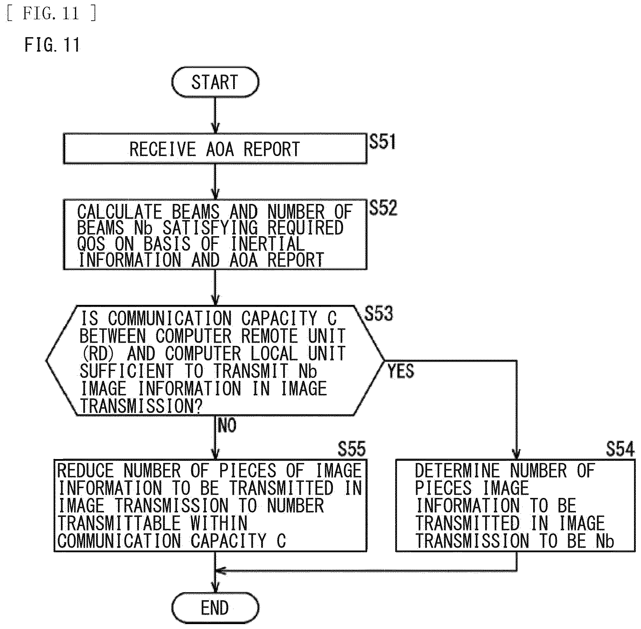

FIG. 11 is a flowchart illustrating processing of determining the valid beams (and the number of beams) to be used in the multi-beam transmission in the phase P3.

In Step S51, the computer 22 receives the AoA report from the HMD 21. The processing proceeds from Step S51 to Step S52.

In Step S52, the computer 22 determines transmission beams satisfying required quality of service (QoS) and the number of beams from the transmission beams emittable from the computer 22 (the picture transmission communicator 41 of the wireless communicator 31) on the basis of the inertial information previously transmitted from the HMD 21 and the AoA Report received in Step S51. The processing proceeds from Step S52 to Step S53.

Here, for example, when the motion to photon latency to be satisfied is set and where an i-th beam b(i) and a j-th beam b(j) (where i ≠ j) respectively have an AoA at the HMD 21 of $\theta(b(i))$ and an AoA at the HMD 21 of $\theta(b(j))$ in any combination b of transmission beams emittable from the computer 22 (transmission beams usable in the multi-beam transmission in the phase P3), the following beam combination b0 and the following number of beams Nb that satisfy the following Expression (1) may be obtained with respect to a threshold $\theta c$ (degree) obtained on the basis of the inertial information of the HMD 21.

[Expression 1]

$$N_b = \min|b'|, \quad b_0 = \operatorname{argmin}|b'|$$

$$\text{s. t.} \quad \forall i,j \quad \exists b' \in b, \left|\theta\big(b'(i)\big) - \theta\big(b'(j)\big)\right| \le \theta_c \qquad \ldots(1)$$

That is, among given combinations b of the transmission beams usable in the multi-beam transmission, a combination b0 is determined which is a combination b' of the transmission beams including a transmission beam of which absolute value of the angular difference of AoA is less than or equal to $\theta c$ with respect to a given transmission beam, and which has a minimum number of elements. Further, the number of beams Nb of the combination b0 of the transmission beams is determined.

It is to be noted that the determination of the transmission beams and the number of beams may not be limited to the determination specifications described above.

In Step S53, the computer 22 determines whether or not the communication capacities of the computer remote unit 51 and the computer local unit 52 are sufficient to transmit image information (encoded information) corresponding to the number of beams Nb from the computer remote unit 51 to the computer local unit 52 in the image transmission.

If it is determined in Step S53 that the communication capacities of the computer remote unit 51 and the computer local unit 52 are sufficient, the processing proceeds to Step S54, and the computer remote unit 51 determines the number of pieces of the image information to be transmitted to the computer local unit 52 in the image transmission to be Nb. When the process in Step S54 ends, the processing of the flowchart ends.

In contrast, if it is determined in Step S53 that the communication capacities of the computer remote unit 51 and the computer local unit 52 are insufficient, that is, if a communication rate C0 (bps) necessary to transmit the image information corresponding to the number of beams Nb from the computer remote unit 51 to the computer local unit 52 in the image transmission is greater than a communication rate C (bps) between the computer remote unit 51 and the computer local unit 52, the processing proceeds to Step S55.

In Step S55, the computer 22 reduces the amount of information to be transmitted from the computer remote unit 51 to the computer local unit 52 in the image transmission so that the communication rate is the communication rate C0 or less. The amount of information may be reduced by reducing the compression ratio at the time of encoding at the encoder 32 (see FIG. 3), or by reducing the number of beams Nb to reduce the number of pieces of the image information (encoded information) transmitted from the computer remote unit 51 to the computer local unit 52 in the image transmission. When the process in Step S55 ends, the processing of the flowchart ends.

<Processing Performed by HMD 21 in Case where Computer 22 Starts Beam Configuration in Phase P2>

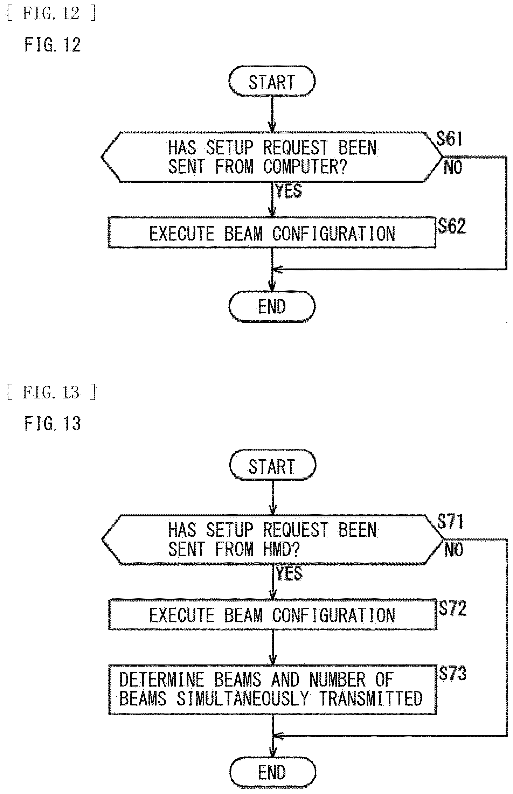

FIG. 12 is a flowchart illustrating exemplary processing performed by the HMD 21 in a case where the computer 22 starts the beam configuration in the phase P2 (in a case where the computer 22 sends the setup request to the HMD 21).

In Step S61, the HMD 21 determines whether or not the setup request has been sent from the computer 22.

If it is not determined in Step S61 that the setup request has been sent, Step S62 is skipped and the processing of the flowchart ends.

If it is determined in Step S61 that the setup request has been sent, the processing proceeds to Step S62, and the HMD 21 executes a process of the beam configuration in the phase P2. When the process in Step S62 ends, the processing of the flowchart ends.

Here, after starting the process of the beam configuration in the phase P2, the HMD 21 receives the beam search from the computer 22, stores the AoA and the information on the reception signal quality of each transmission beam (the AoA information, see FIG. 9) in the AoA information frame, and transmits the AoA information frame to the computer 22. At this time, in a case where the HMD 21 has detected the AoA of a large number of beams, the HMD 21 may transmit the AoA information of all the transmission beams to the computer 22 by dividing the AoA information into a plurality of AoA information frames. Further, the plurality of AoA information frames may include the AoA information of the same transmission beam.

<Processing Performed by Computer 22 in Case where HMD 21 Sends Setup Request to Computer 22>

FIG. 13 is a flowchart illustrating exemplary processing performed by the computer 22 in a case where the HMD 21 starts the beam configuration in the phase P2 (in a case where the HMD 21 sends the setup request to the computer 22).

In Step S71, the computer 22 determines whether or not the setup request has been sent from the computer 22.

If it is not determined in Step S71 that the setup request has been sent from the HMD 21, Step S72 and Step S73 are skipped and the processing of the flowchart ends.

If it is determined in Step S71 that the setup request has been sent from the HMD 21, the processing proceeds from Step S71 to Step S72.

In Step S72, the computer 22 executes the beam configuration in the phase P2. That is, the computer 22 transmits the beam search to the HMD 21, and receives the AoA information frame from the HMD 21. Thereafter, the computer 22 retrieves the information on the AoA at the HMD 21 and the reception signal quality of each transmission beam transmitted from the computer local unit 52 from the received AoA information frame. The processing proceeds from Step S72 to Step S73.

In Step S73, the computer 22 determines the valid beams (and the number of beams) to be used (simultaneously transmitted) in the transmission of the converted image information (the encoded information) in the multi-beam transmission in the phase P3 on the basis of the AoA at the HMD 21 and the reception signal quality of each transmission beam obtained in Step S72. When the process in Step S73 ends, the processing of the flowchart ends.

<Processing Performed by HMD 21 in Case where HMD 21 Starts Beam Configuration in Phase P2>

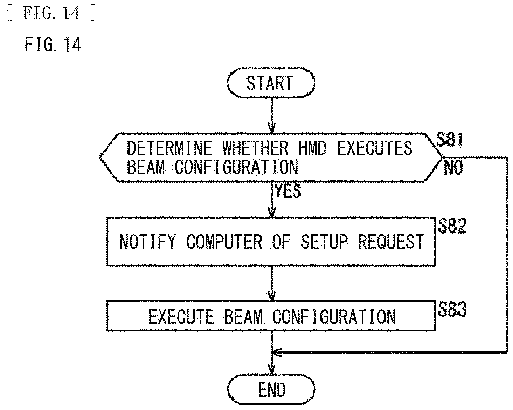

FIG. 14 is a flowchart illustrating exemplary processing performed by the HMD 21 in a case where the HMD 21 starts the beam configuration in the phase P2 (in a case where the HMD 21 sends the setup request to the computer 22).

In Step S81, the HMD 21 determines whether or not the beam configuration is to be executed in the phase P2.

The HMD 21 determines that the beam configuration is to be executed in the phase P2 in a case where the amount of change in AoA at the HMD 21 of any transmission beam transmitted from the computer 22 exceeds a predetermined threshold value.

In addition, the HMD 21 determines that the beam configuration is to be executed in the phase P2 in a case where the HMD 21 determines that the propagation environment between the computer local unit 52 and the HMD 21 has changed.

Further, the HMD 21 determines that the beam configuration is to be executed in the phase P2 in a case where the moving amount of the HMD 21 is determined to exceed a predetermined threshold value on the basis of the inertial information acquired by the HMD 21. However, the determination by the HMD 21 as to whether the beam configuration is to be executed in the phase P2 is not limited to these examples.

If it is not determined in Step S81 that the beam configuration is to be executed in the phase P2, Step S82 and Step S83 are skipped, and the processing of the flowchart ends.

If it is determined in Step S81 that the beam configuration is to be executed in the phase P2, the processing proceeds from Step S81 to Step S82.

In Step S82, the HMD 21 sends the setup request to the computer 22 to request the computer 22 to execute the beam configuration in the phase P2. The processing proceeds from Step S82 to Step S83.

In Step S83, the HMD 21 executes the beam configuration. That is, the HMD 21 receives the beam search from the computer local unit 52, stores the AoA and the information on the reception signal quality of each transmission beam (the AoA information, see FIG. 9) in the AoA information frame, and transmits the AoA information frame to the computer 22. When the process in Step S83 ends, the processing of the flowchart ends.

(Multi-Beam Transmission in Phase P3)

The computer 22 estimates future states of the HMD 21 at the time of reception of the image information (the encoded information) in the multi-beam transmission in the phase P3 illustrated in FIG. 7, on the basis of the inertial information and the information on the tracker 35 (see FIG. 3) previously transmitted from the HMD 21 to the computer 22. Here, the states (future information) of the HMD 21 may be, but not limited to, a direction in which the HMD 21 is faces (front direction) or a position (three-dimensional coordinates) of the HMD 21. Further, although the plurality of states are estimated as the future states of the HMD 21, a single state of the HMD 21 may be alternatively estimated.

The original image information generated by rendering in the computer 22 (the image generator 34) is converted to the converted image information based on the future states of the HMD 21. The converted image information is encoded by the encoder 32 (see FIG. 3) and converted to the encoded information, and thereafter sent to the HMD 21 by the wireless communicator 31 (see FIG. 3) using the transmission beam (the valid beam) allocated to the encoded information. It is to be noted that a transmission beam of which AoA is a direction closest to the direction in which the reception beam formed by the HMD 21 will be oriented in the future state of the HMD 21 is set as the transmission beam for transmitting the encoded information generated on the basis of the future state.

In FIG. 7, n future states of the HMD 21 are estimated, and the encoded information is transmitted from the computer local unit 52 to the HMD 21 as the image data by n transmission beams in total.

In Step S12 of FIG. 7, the converted image information obtained as a result of conversion of the original image information at the image generator 34 of the computer remote unit 51 of FIG. 3 is encoded into the encoded information by the encoder 32, and thereafter the encoded information is transmitted as the image transmission from the computer remote unit 51 to the computer local unit 52 via the core communicator 62 and the core communicator 72.

In Step S13, the wireless communicator 31 of the computer local unit 52 (see FIG. 3) sends the received image transmission (the encoded information) as the image data to the HMD 21 using the allocated transmission beam.

It is to be noted that one piece of the encoded information may be divided into a plurality pieces of image information in the wireless communicator 31, and the plurality pieces of image information may be transmitted to the HMD 21. Alternatively, a plurality pieces of image data may be sequentially transmitted to the HMD 21 in a single time of the multi-beam transmission.

In Step S14, the computer local unit 52 also sends an ack request to the HMD 21. The ack request includes information requesting for a reception acknowledgement to the image data sent immediately before.

In Step S15, the HMD 21 sends an ack frame to the computer local unit 52.

<Configuration Example of Ack frame>

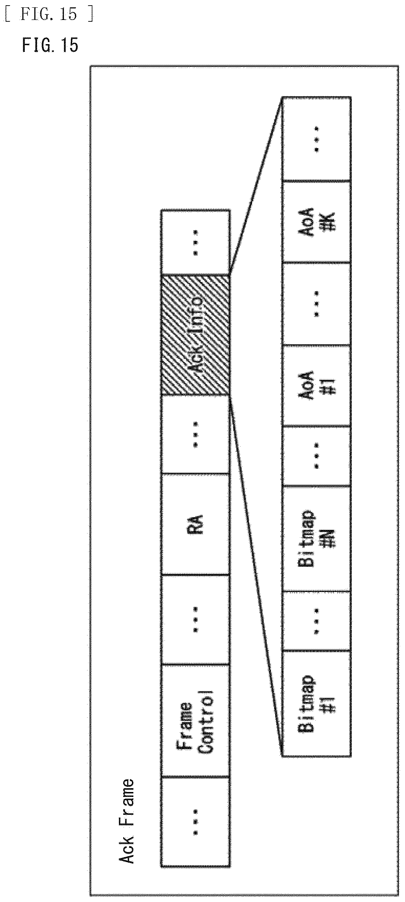

FIG. 15 is a diagram illustrating a configuration example of the ack frame.

The ack frame includes information indicating whether the image data has been correctly received by the HMD 21 without errors. Frame control information and RA information are similar to the AoA information illustrated in FIG. 9. The frame control information includes information indicating that the frame is the ack frame. The RA information includes information indicating a wireless communication terminal (the wireless communicator 31 of the computer local unit 52) which is a destination to receive the information. The information indicating the wireless communication terminal may be, for example but not limited to, a MAC address.

Ack information includes a bitmap and an AoA as information regarding the plurality pieces of image data received immediately prior to the ack frame.

The bitmap stores information indicating whether the image data has been correctly received. For example, in a case where N frames of the image data have been just received, bitmaps #1 to #N each include information indicating that the frame has been received correctly without errors. The bitmaps #1 to #N may each store "1" in a case where the frame has been correctly received, and "0" in a case where the frame has not been correctly received; however, this is a non-limiting example.

Further, the AoA includes information indicating the AoA of the beam of the image data just received by the HMD 21. For example, in a case where N frames of the image data have been just received, AoA #1 to AoA #K may include information indicating the AoA of the transmission beams for K frames among the N frames.

In Step S16 of FIG. 7, the computer local unit 52 having received the ack frame transmits an ack report to the computer remote unit 51.

<Processing Performed by Computer 22 in Multi-Beam Transmission in Phase P3>

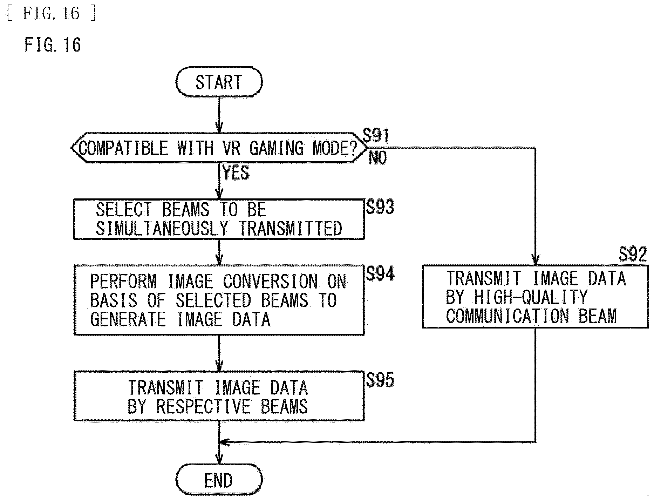

FIG. 16 is a flowchart illustrating exemplary processing performed by the computer 22 in the multi-beam transmission in the phase P3.

In Step S91, the computer 22 determines whether or not the HMD 21 is compatible with the multi-beam transmission in the phase P3 on the basis of the information on a VR gaming mode among the capability information exchanged in advance.

If it is not determined in Step S91 that the HMD 21 is compatible with the multi-beam transmission in the phase P3, the processing proceeds to Step S92. The computer 22 selects a beam with high communication quality and sends the image data to the HMD 21. The processing of the flowchart is thereby ended.

If it is determined in Step S91 that the HMD 21 is compatible with the multi-beam transmission in the phase P3, the processing proceeds from Step S91 to Step S93, and the computer 22 starts the multi-beam transmission.

In Step S93, the computer 22 selects transmission beams (valid beams) to be used in the multi-beam transmission. The processing proceeds from Step S93 to Step S94.

In Step S94, the computer 22 performs image conversion on the original image information on the basis of the multiple selected transmission beams to generate the image data (the encoded information). The processing proceeds from Step S94 to Step S95.

In Step S95, the computer 22 sends the image data to the HMD 21 using the selected transmission beam. When the process in Step S95 ends, the processing of the flowchart ends.

It is to be noted that the selection of the beams may not be executed in the multi-beam transmission.

In addition, the processes in Step S91 to Step S95 may be performed by the computer remote unit 51 or the computer local unit 52, and all the processes are not necessarily performed by the computer remote unit 51 or the computer local unit 52.

<Processing Performed by HMD 21 in Multi-Beam Transmission in Phase P3>

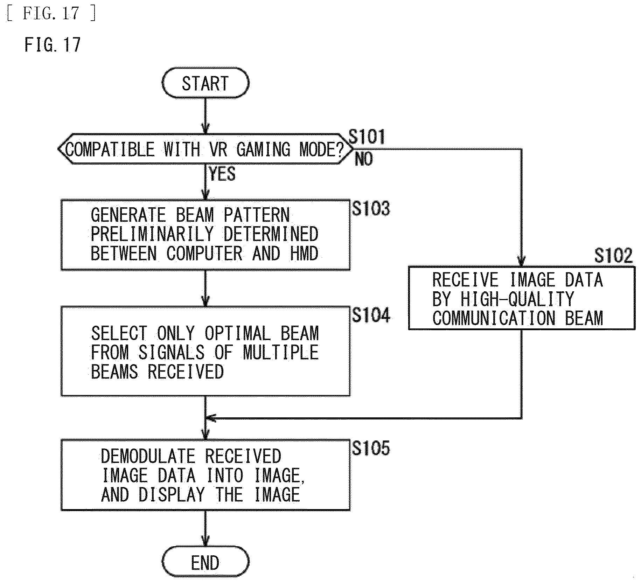

FIG. 17 is a flowchart illustrating exemplary processing performed by the HMD 21 in the multi-beam transmission in the phase P3.

In Step S101, the HMD 21 determines whether or not the computer 22 is compatible with the multi-beam transmission on the basis of the information on the VR gaming mode of the capability information exchanged in advance.

If it is not determined in Step S101 that the computer 22 is compatible with the multi-beam transmission, the processing proceeds from Step S101 to Step S102. In Step S102, the HMD 21 selects a high-quality communication beam to receive and demodulate image data from the computer 22, and the processing proceeds to Step S105.

If it is determined in Step S101 that the computer 22 is compatible with the multi-beam transmission, the processing proceeds from Step S101 to Step S103.

In Step S103, the HMD 21 sets the directivity of the antennas for receiving the transmission beams from the computer 22 to a condition determined in advance between the computer 22 and the HMD 21. The directivity of the reception beam of the HMD 21 may be determined on the basis of the information included in the setting report in the beam configuration in the phase P2 and the capability information.

In Step S104, the HMD 21 receives the image data from the computer 22. The HMD 21 receives the image data transmitted by the transmission beam selected in accordance with a predetermined selection criterion. For example, the HMD 21 may select and receive only a transmission beam with the largest reception power (reception gain) among multiple transmission beams reaching the HMD 21, but the selection criterion is not limited thereto. Although not illustrated in the drawings, the directivity of the reception beam of the HMD 21 may be changed in accordance with the inertial information obtained in the HMD 21. For example, the half-width of the reception beam may be changed. The processing proceeds from Step S104 to Step S105.

In Step S105, the HMD 21 performs a decoding process and a rendering process on the received image data to generate image information to be displayed on the display 86. When the process in Step S105 ends, the processing of the flowchart ends.

It is to be noted that all the message exchanges illustrated in the overall sequence diagram of FIG. 7 are not necessarily performed in the multi-beam transmission in the phase P3. For example, the ack request, the ack, or the ack report may be omitted.

<<Embodiment 2>>

<Outline of Processing of Embodiment 2>

Embodiment 2 of the information processing system 11 including the computer 22 according to the first configuration example illustrated in FIG. 2 will now be described.

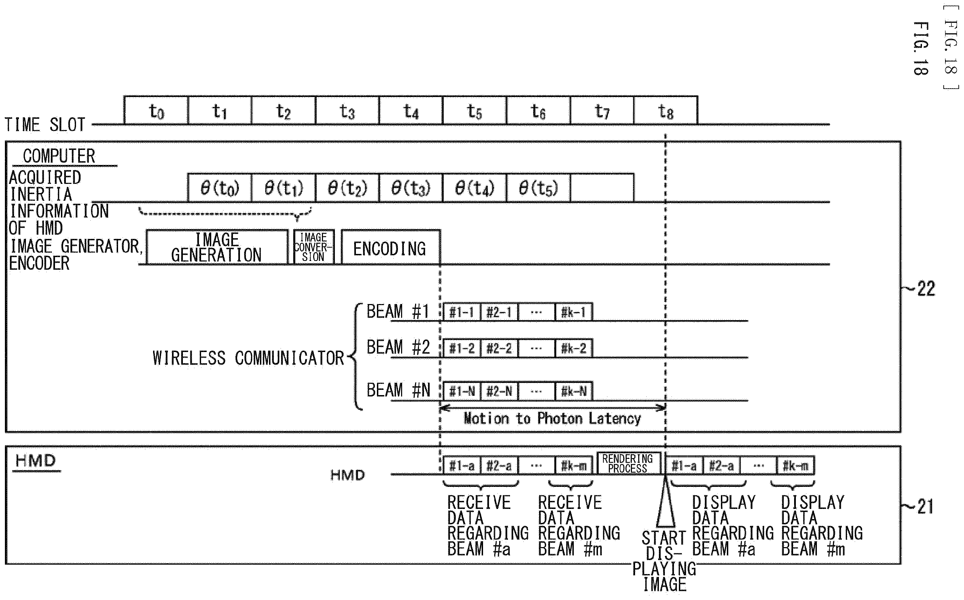

FIG. 18 is a diagram illustrating the outline of the processing of Embodiment 2 of the information processing system 11.

In FIG. 18, a time axis (horizontal axis) is sectioned into time slots at a constant time interval, as in the case of FIG. 5. The time slots are represented by time t0, t1, t2, and so on. FIG. 18 illustrates timings of various processes performed by the computer 22 and the HMD 21 along the time axis.

The computer 22 is provided relatively close to the HMD 21. For example, the computer 22 and the HMD 21 may be provided in the same building. The computer 22 wirelessly communicates directly with the HMD 21.

The image generator 34 (see FIG. 2) in the computer 22 visualizes three-dimensional graphic numerical data received from the controller 33 by rendering, and generates the original image information to be displayed on the HMD 21 within a period from the time t0 to the time t2. The image generator 34 then converts the generated original image information into the converted image information based on the future status of the HMD 21 in future time t5.

In the time t2 in which the image generator 34 generates the original image information, the controller 33 estimates a plurality of future states of the HMD 21 in the time t5, i.e., a plurality of states of the HMD 21 facing in different directions in the time t5 on the basis of the most recent (latest) inertial information θ(t) (where t denotes the time before t1) that the controller 33 has already received from the HMD 21. The controller 33 then supplies the plurality of estimated future states of the HMD 21 to the image generator 34. As the inertial information θ(t) is similar to that illustrated in FIG 5, a description thereof is omitted.

The image generator 34 performs image conversion of the original image information to generate the converted image information based on each of the plurality of future states of the HMD 21 in the time t5.

The encoder 32 encodes each pieces of the converted image information generated by the image generator 34 and corresponding to each of the plurality of future states of the HMD 21 into a plurality of pieces of encoded information in a separate manner, and sends the pieces of encoded information to the wireless communicator 31.

The wireless communicator 31 (or the picture transmission communicator 41) generates multiple beams #1 to #N (where N is 2 or greater) having directivity, and sends the plurality pieces of encoded information received from the encoder 32 to the HMD 21 using the beams #1 to #N. As the beams #1 to #N are similar to those in FIG. 5, descriptions thereof are omitted.

Among the transmission beams that the wireless communicator 31 is able to emit, the controller 33 allocates the transmission beams to the respective pieces of encoded information. For example, in a case where the plurality of estimated future states of the HMD 21 is assumed, the controller 33 allocates a transmission beam coming from a direction closest to the direction in which the reception beam formed by the HMD 21 in the estimated state is oriented, as the transmission beam for transmitting the encoded information generated on the basis of the estimated state.

Thereafter, the controller 33 supplies beam allocation information indicating the allocation of the transmission beams to the respective pieces of encoded information to the wireless communicator 31.

The wireless communicator 31 sends the plurality pieces of encoded information received from the encoder 32 from the picture transmission communicator 41 to the HMD 21 using the respective transmission beams on the basis of the beam allocation information received from the controller 33.

The picture transmission communicator 91 of the wireless communicator 81 in the HMD 21 (see FIG. 4) forms a reception beam having high reception sensitivity and directivity in a particular direction. For example, the picture transmission communicator 91 generates a reception beam having such directivity that reception power is maximized with respect to the direction in which the reception beam formed by the HMD 21 is oriented. Among the multiple transmission beams #1 to #N emitted from the wireless communicator 31 (the picture transmission communicator 41) of the computer 22, the picture transmission communicator 91 receives only the encoded information transmitted using the transmission beam coming from the direction closest to the direction in which the reception beam of the HMD 21 is oriented (the direction in which the reception power of the reception beam is maximized).

That is, among the plurality of future states of the HMD 21 in the time t5 estimated by the controller 33 of the computer 22, the encoded information corresponding to the state closest to the actual state of the HMD 21 state in the time t5 is transmitted to the HMD 21 by the transmission beam coming from the direction closest to the direction in which the reception beam of the HMD 21 is oriented. The wireless communicator 81 of the HMD 21 demodulates, for example, only the transmission beam having the largest reception power among the transmission beams reaching the picture transmission communicator 91, and receives the encoded information transmitted by the beam.

In the HMD 21, the wireless communicator 81 indicates that encoded information #1-a, #2-a transmitted by a beam #a among the beams #1 to #N emitted from the wireless communicator 31 of the computer 22 in the time t5 have been received for two consecutive frames. The wireless communicator 81 continues to receive the encoded information until time t7. Since the states of the HMD 21 changes from the time t5 to the time t7, a case where the wireless communicator 81 receives encoded information #k-m transmitted by a beam #m different from the beam #a by the time t7 is exemplified.

The encoded information received by the wireless communicator 31 is subjected to a rendering process such as a decoding process at the image generator 84 in FIG. 4, and the converted image information before being encoded by the encoder 32 of the computer 22 is temporarily stored in the storage 85. Thereafter, the image information stored in the storage 85 is displayed on the display 86 from the time t8 when the drawing process of the encoded information received between the time t5 and the time t7 is completed.

Motion-to-photon latency in the period from the time t5 when the HMD 21 starts receiving the encoded information from the computer 22 to the time t8 when the HMD 21 starts displaying the image information of the encoded information on the display 86 represents a delay time relating to the displaying. The motion-to photon latency is generally the sum of a transmission delay and a rendering delay. The delay time is greatly reduced by applying the present technology, as in the case of Embodiment 1 illustrated in FIG. 5.

In addition, since the HMD 21 receives the image information based on the state of the HMD 21 itself, there is no need to correct the image information by the HMD 21. This reduces the processing capacity of the HMD 21. Therefore, it is possible to reduce the size, weight, and cost of the HMD 21.

In addition, the HMD 21 receives the image information based on the state of the HMD 21 by receiving the image information (the encoded information) of the transmission beam coming from the direction closest to the direction in which the reception beam is basically oriented among the multiple transmission beams simultaneously transmitted from the computer 22. Therefore, there is no need to select a beam, which prevents the processing capacity from increasing.

<Details of Processing of Embodiment 2>

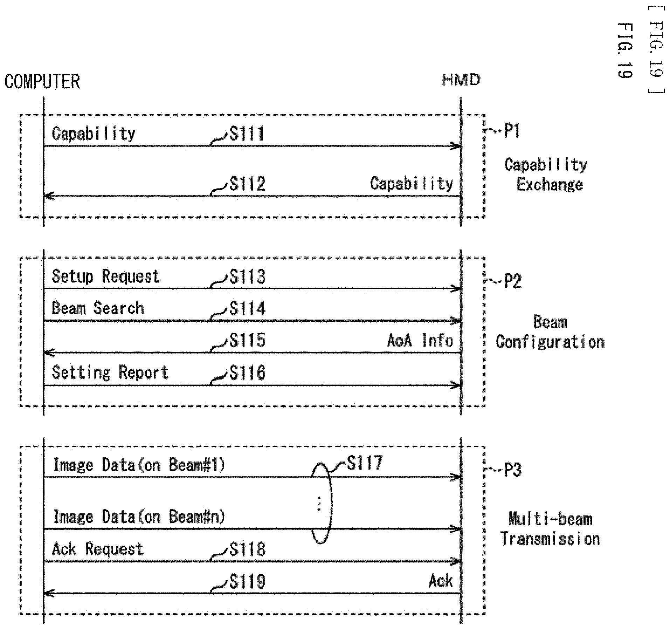

FIG. 19 is an overall sequence diagram of the information processing system 11 of Embodiment 2.

In Embodiment 2, three phases are mainly assumed: the capability exchange in the phase P1, the beam configuration in the phase P2, and the multi-beam transmission in the phase P3, as in the case of Embodiment 1. The information exchanged between the computer 22 and the HMD 21 is the same as the information exchanged between the computer local unit 52 and the HMD 21 in Embodiment 1.

That is, Step S111 and Step S112 in the capability exchange in the phase P1 in FIG. 19 respectively correspond to Step S2 and Step S3 in the capability exchange in the phase P1 illustrated in FIG. 7. Step 113 to Step S116 in the beam configuration in the phase P2 illustrated in FIG. 19 respectively correspond to Step S6 to Step S8 and Step S11 in the beam configuration in the phase P2 illustrated in FIG. 7. Step S117 to Step S119 in the multi-beam transmission in the phase P3 illustrated in FIG. 19 respectively correspond to Step S13 to Step S15 in the multi-beam transmission in the phase P3 illustrated in FIG. 7.

It is to be noted that, although the computer 22 performs the setup request in the beam configuration in the phase P2, the HMD 21 may perform the setup request in the same manner as in the case of Embodiment 1.

<Processing of Determining Beams to be Used for Simultaneous Transmission of Encoded Information in Image Transmission in Phase P3 of Embodiment 2>

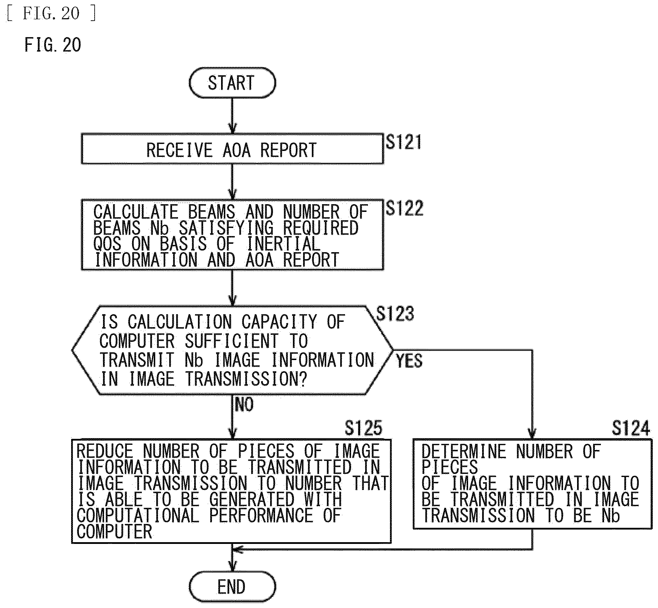

FIG. 20 is a flowchart illustrating processing of determining beams to be used for simultaneous transmission of the encoded information in the image transmission in the phase P3 according to Embodiment 2.

In Embodiment 1, the communication capacity between the computer remote unit 51 and the computer local unit 52 limits the number of pieces of the image information that are able to be simultaneously transmitted; however, in Embodiment 2, the computational performance limitation of the computer 22 limits the number of pieces of the converted image information (encoded information) that are able to be generated. For example, if the converted image information is able to be generated only up to NO due to the computational performance limitation of the computer 22, the upper limit of the number of pieces of the converted image information that are able to be generated may be set to N0, where NO serves as a fixed threshold. However, the threshold value is not limited to this example.

In Step S121, the computer 22 receives the AoA report (AoA information) from the HMD 21. The processing proceeds from Step S121 to Step S122.

In Step S122, the computer 22 determines transmission beams satisfying required quality of service (QoS) on the basis of the inertial information and the AoA report of the HMD 21 fed back in the past. The processing proceeds from Step S122 to Step S123.

In Step S123, the computer 22 determines whether or not a number of pieces of image information corresponding to the number of beams Nb of the transmission beams satisfying the QoS are able to be transmitted to the HMD 21 in the image transmission with the computational performance of the computer 22.

If it is determined in Step S123 that a number of pieces of the image information corresponding to the number of beams Nb are able to be transmitted to the HMD 21 in the image transmission, the processing proceeds to Step S124, and the computer 22 determines the number of pieces of the image information to be transmitted in the image transmission to be Nb. When the process in Step S123 ends, the processing of the flowchart ends.

In contrast, if it is not determined in Step S123 that a number of pieces of the image information corresponding to the number of beams Nb are able to be transmitted to the HMD 21 in the image transmission, the processing proceeds to Step S125, and the computer 22 reduces the number of pieces of the image information to be transmitted in the image transmission to a number smaller than Nb. That is, since all pieces of the image information are not able to be transmitted to the HMD 21 using the transmission beams, the computer 22 reduces the number of pieces of the image information to be transmitted in the image transmission to the number that is able to be generated with the computational performance of the computer 22. When the process in Step S125 ends, the processing of the flowchart ends.

According to the present technology described above, the HMD 21 receives the image information based on the state. Accordingly, there is no need to execute processing such as image correction in the HMD 21. This reduces the processing capacity of the HMD 21. Therefore, it is possible to reduce the size, weight, and cost of the HMD 21.

In addition, the HMD 21 receives the image information based on the state of the HMD 21 by receiving the image information (the encoded information) of the transmission beam coming from the direction closest to the direction in which the reception beam formed by the HMD 21 is basically oriented among the multiple transmission beams simultaneously transmitted from the computer 22. Therefore, there is no need to select a beam, which prevents the processing capacity from increasing.

Further, even when a change in condition, such as a movement of the HMD 21, occurs, it is possible to secure an optimum transmission path on the basis of the change in condition of the HMD 21 by appropriately changing the transmission beam for transmitting the image information. This improves the signal quality.

<Program>

Some or all of the computer 22 illustrated in FIG. 1, the HMD 21 illustrated in FIG. 1, the computer remote unit 51 illustrated in FIG. 3, and the computer local unit 52 illustrated in FIG. 3 may be implemented by hardware or software. If a series of processes is implemented by software, programs of the software are installed on a computer. Here, examples of the computer include a computer incorporated in dedicated hardware, or a general-purpose personal computer that is able to achieve various functions by installing various programs.

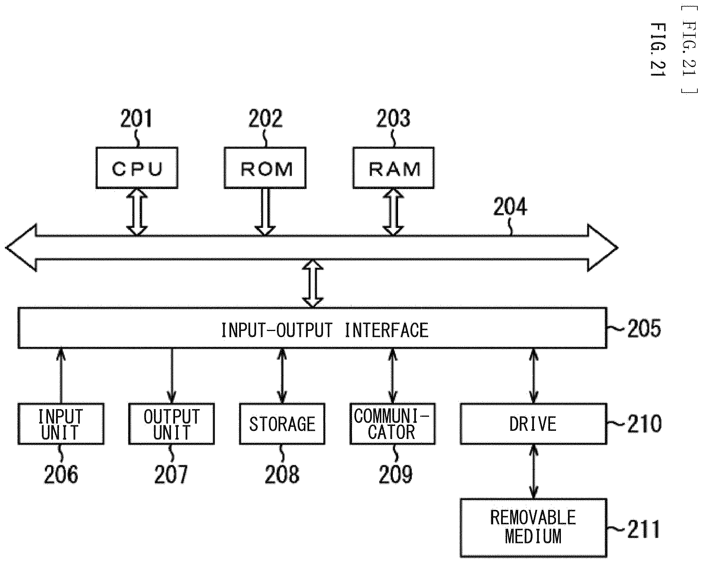

FIG. 21 is a block diagram illustrating a configuration example of the hardware in the computer that implements the series of processes described above using programs.

In the computer, a central processing unit (CPU) 201, a read only memory (ROM) 202, and a random access memory (RAM) 203 are mutually coupled by a bus 204.

In addition, an input-output interface 205 is coupled to the bus 204. An input unit 206, an output unit 207, a storage 208, a communicator 209, and a drive 210 are coupled to the input-output interface 205.

The input unit 206 includes a keyboard, a mouse, a microphone, and the like. The output unit 207 includes a display, a speaker, or the like. The storage 208 includes a hard disk, a nonvolatile memory, and the like. The communicator 209 includes a network interface and the like. The drive 210 drives a removable medium 211, which may be a magnetic disk, an optical disk, a magneto-optical disk, or a semiconductor memory.

In the computer configured as described above, the CPU 201 performs the above-described series of processes by, for example, loading a program stored in the storage 208 into the RAM 203 via the input-output interface 205 and the bus 204, and executing the program.

The program executed by the computer (CPU 201) may be provided by being recorded in the removable medium 211 serving as a package medium or the like, for example. The program may also be provided via a wired or wireless transmission medium, such as a local area network, the Internet, digital satellite broadcasting, or the like.

The computer installs programs in the storage 208 via the input-output interface 205 by attaching the removable medium 211 to the drive 210. The programs may be received by the communicator 209 via a wired or wireless transmission medium and installed in the storage 208. Alternatively, the programs may be installed in the ROM 202 or the storage 208 in advance.

It is to be noted that the programs executed by the computer may be programs executed in time series in the order described herein, or may be programs executed in parallel or at a required timing such as when a call is made.

It is to be noted that the technology is able to take the following configurations.

<1> An image transmission apparatus including:

an image generator that generates multiple different pieces of converted image information by converting image information on the basis of inertial information transmitted from a display apparatus; and
a wireless communicator that transmits the multiple different pieces of converted image information generated by the image generator to the display apparatus using multiple beams different from each other.

<2> The image transmission apparatus according to <1>, further including

an encoder that encodes the converted image information into encoded information, in which
the wireless communicator transmits the encoded information to the display apparatus.

<3> The image transmission apparatus according to <1> or <2>, in which the image generator generates the converted image information based on a state of the display apparatus that receives the image information estimated on the basis of the inertial information.

<4> The image transmission apparatus according to <3>, in which the wireless communicator transmits the converted image information based on the state of the display apparatus using a beam receivable by the display apparatus in the state.

<5> The image transmission apparatus according to <4>, further including a controller that causes the converted image information to be sent to the wireless communicator by the beam.

<6> The image transmission apparatus according to any one of <1> to <5>, in which notification information is acquired from the display apparatus, the notification information relating to directions of arrival at the display apparatus of the multiple different beams transmitted from the wireless communicator.

<7> The image transmission apparatus according to <6>, in which a request for forming directivity of a beam is made to the display apparatus on the basis of the notification information from the display apparatus.

<8> The image transmission apparatus according to <6> or <7>, in which a beam to be used to transmit the converted image information is selected from multiple beams transmittable from the wireless communicator on the basis of the notification information from the display apparatus.

<9> The image transmission apparatus according to any one of <1> to <8>, in which the number of beams to be used to transmit the converted image information from the wireless communicator is controlled on the basis of computational performance of the image transmission apparatus.

<10> The image transmission apparatus according to <1> to <9>, including:

a first apparatus unit including the image generator; and
a second apparatus unit including the wireless communicator, in which
the first apparatus unit and the second apparatus unit are communicably coupled to each other.

<11> The image transmission apparatus according to <10>, in which

the first apparatus unit further includes:
a first controller that estimates a plurality of states in which the display apparatus is able to perform a receiving operation on the basis of the inertial information transmitted from the display apparatus;

an encoder that encodes each of the multiple pieces of the converted image information generated by the image generator on the basis of the plurality of states estimated by the first controller into encoded information; and
a first communicator that transmits the encoded information to the second apparatus unit and receives the inertial information transmitted from the display apparatus from the second apparatus unit.

<12> The image transmission apparatus according to <11>, in which

the second apparatus unit further includes:
a second communicator that receives the encoded information from the first apparatus unit and transmits the inertial information transmitted from the display apparatus to the first apparatus unit; and
a second controller that causes the encoded information obtained as a result of encoding of the converted image information to be sent to the wireless communicator by different beams for respective pieces of the converted image information.

<13> The image transmission apparatus according to <12>, in which the first controller, the second controller, or both control the number of beams to be used to transmit the encoded information from the wireless communicator on the basis of a communication capacity between the first apparatus unit and the second controller.
<14> A display apparatus including:

a wireless communicator that demodulates one of multiple beams coming from an image transmission apparatus;
a display that displays image information obtained as a result of demodulation of the beam by the wireless communicator;
a positioning module that acquires inertial information through measurement; and
an inertial information communicator that transmits the inertial information acquired by the positioning module to the image transmission apparatus.

<15> The display apparatus according to <14>, further including an image generator that converts encoded information obtained by encoding the image information obtained as the result of the demodulation of the beam by the wireless communicator into the image information.
<16> The display apparatus according to <14> or <15>, in which, in a case where the image information is transmitted from the image transmission apparatus using multiple different beams, the display apparatus notifies the image transmission apparatus of information regarding a direction of arrival of each of the beams.
<17> The display apparatus according to any one of <14> to <16>, in which the wireless communicator forms a beam in accordance with a request from the image transmission apparatus.
<18> The display apparatus according to any one of <14> to <17>, in which a request for executing a process of acquiring information regarding directions of arrival of beams transmitted from the image transmission apparatus is made to the image transmission apparatus on the basis of the inertial information acquired by the positioning module.
<19> The display apparatus according to any one of <14> to <18>, in which capability information indicating that the display apparatus is compatible with the image transmission apparatus that transmits the image information using multiple different beams.
<20> The display apparatus according to any one of <14> to <19>, in which directivity of a beam formed by the wireless communicator is controlled on the basis of the inertial information obtained by the positioning module.

Reference Signs List

11 information processing system, 21 HMD, 22 computer, 31, 81 wireless communicator, 32 encoder, 33,61,71,82 controller, 34,84 image generator, 51 computer remote unit, 52 computer local unit, 83 positioning module group, 86 display

**Claims**

1.   An image transmission apparatus comprising:

an image generator that generates multiple different pieces of converted image information by converting image information on a basis of inertial information transmitted from a display apparatus; and
a wireless communicator that transmits the multiple different pieces of converted image information generated by the image generator to the display apparatus using multiple beams different from each other.

2. The image transmission apparatus according to claim 1, further comprising

an encoder that encodes the converted image information into encoded information, wherein
the wireless communicator transmits the encoded information to the display apparatus.

3. The image transmission apparatus according to claim 1, wherein the image generator generates the converted image information based on a state of the display apparatus that receives the image information estimated on a basis of the inertial information.

4. The image transmission apparatus according to claim 3, wherein the wireless communicator transmits the converted image information based on the state of the display apparatus using a beam receivable by the display apparatus in the state.

5. The image transmission apparatus according to claim 4, further comprising a controller that causes the converted image information to be sent to the wireless communicator by the beam.

6. The image transmission apparatus according to claim 1, wherein notification information is acquired from the display apparatus, the notification information relating to directions of arrival at the display apparatus of the multiple different beams transmitted from the wireless communicator.

7. The image transmission apparatus according to claim 6, wherein a request for forming directivity of a beam is made to the display apparatus on a basis of the notification information from the display apparatus.

8. The image transmission apparatus according to claim 6, wherein a beam to be used to transmit the converted image information is selected from multiple beams transmittable from the wireless communicator on a basis of the notification information from the display apparatus.

9. The image transmission apparatus according to claim 1, wherein number of beams to be used to transmit the converted image information from the wireless communicator is controlled on a basis of computational performance of the image transmission apparatus.

10. The image transmission apparatus according to claim 1, comprising:

a first apparatus unit including the image generator; and
a second apparatus unit including the wireless communicator, wherein
the first apparatus unit and the second apparatus unit are communicably coupled to each other.

11. The image transmission apparatus according to claim 10, wherein
the first apparatus unit further includes:

a first controller that estimates a plurality of states in which the display apparatus is able to perform a receiving operation on a basis of the inertial information transmitted from the display apparatus;
an encoder that encodes each of the multiple pieces of the converted image information generated by the image generator on a basis of the plurality of states estimated by the first controller into encoded information; and
a first communicator that transmits the encoded information to the second apparatus unit and receives the inertial information transmitted from the display apparatus from the second apparatus unit.

12. The image transmission apparatus according to claim 11, wherein
the second apparatus unit further includes:

a second communicator that receives the encoded information from the first apparatus unit and transmits the inertial information transmitted from the display apparatus to the first apparatus unit; and
a second controller that causes the encoded information obtained as a result of encoding of the converted image information to be sent to the wireless communicator by different beams for respective pieces of the converted image information.

13. The image transmission apparatus according to claim 12, wherein the first controller, the second controller, or both control number of beams to be used to transmit the encoded information from the wireless communicator on a basis of a communication capacity between the first apparatus unit and the second controller.

14. A display apparatus comprising:

a wireless communicator that demodulates one of multiple beams coming from an image transmission apparatus;
a display that displays image information obtained as a result of demodulation of the beam by the wireless communicator;
a positioning module that acquires inertial information through measurement; and
an inertial information communicator that transmits the inertial information acquired by the positioning module to the image transmission apparatus.

15. The display apparatus according to claim 14, further comprising an image generator that converts encoded information obtained by encoding the image information obtained as the result of the demodulation of the beam by the wireless communicator into the image information.

16. The display apparatus according to claim 14, wherein, in a case where the image information is transmitted from the image transmission apparatus using multiple different beams, the display apparatus notifies the image transmission apparatus of information regarding a direction of arrival of each of the beams.

17. The display apparatus according to claim 14, wherein the wireless communicator forms a beam in accordance with a request from the image transmission apparatus.

18. The display apparatus according to claim 14, wherein a request for executing a process of acquiring information regarding directions of arrival of beams transmitted from the image transmission apparatus is made to the image transmission apparatus on a basis of the inertial information acquired by the positioning module.

19. The display apparatus according to claim 14, wherein capability information indicating that the display apparatus is compatible with the image transmission apparatus that transmits the image information using multiple different beams.

20. The display apparatus according to claim 14, wherein directivity of a beam formed by the wireless communicator is controlled on a basis of the inertial information obtained by the positioning module.

[ FIG. 1 ]

FIG. 1

11

21 → HMD

IMAGE INFORMATION    CONTROL INFORMATION

22 →

COMPUTER

[ FIG. 2 ]

FIG. 2

[ FIG. 3 ]

FIG. 3

[ FIG. 4 ]

FIG. 4

[ FIG. 5 ]

FIG. 5

EP 4 068 267 A1

TIME SLOT

| $t_0$ | $t_1$ | $t_2$ | $t_3$ | $t_4$ | $t_5$ | $t_6$ | $t_7$ | $t_8$ |

COMPUTER REMOTE UNIT (RD) ~51

ACQUIRED INERTIA INFORMATION OF HMD

| $\theta(t_0)$ | $\theta(t_1)$ | $\theta(t_2)$ | $\theta(t_3)$ | $\theta(t_4)$ | $\theta(t_5)$ |

IMAGE GENERATOR, ENCODER

IMAGE GENERATION | IMAGE CONVERSION | ENCODING

COMPUTER LOCAL UNIT ~52

WIRELESS COMMUNICATOR

BEAM #1 | #1-1 | #2-1 | ... | #k-1

BEAM #2 | #1-2 | #2-2 | ... | #k-2

BEAM #N | #1-N | #2-N | ... | #k-N

Motion to Photon Latency

HMD ~21

HMD | #1-a | #2-a | ... | #k-m | RENDERING PROCESS | #1-a | #2-a | ... | #k-m

RECEIVE DATA REGARDING BEAM #a

RECEIVE DATA REGARDING BEAM #m

START DISPLAYING IMAGE

DISPLAY DATA REGARDING BEAM #a

DISPLAY DATA REGARDING BEAM #m

[ FIG. 6 ]

FIG. 6

[ FIG. 7 ]

FIG. 7

[ FIG. 8 ]

FIG. 8

| Capability | | |
|---|---|---|
| ... | VR Gaming Mode | ... |

[ FIG.9 ]

FIG.9

[ FIG. 10 ]

FIG. 10

```
                    ┌─────────────┐
                    │    START    │
                    └──────┬──────┘
                           │
                           ▼
        ╱─────────────────────────────────────╲  S41
       ╱  DETERMINE WHETHER COMPUTER           ╲
       ╲  EXECUTES BEAM CONFIGURATION          ╱  NO
        ╲─────────────────┬───────────────────╱
                          │ YES
                          ▼
        ┌─────────────────────────────────────┐ S42
        │   NOTIFY HMD OF SETUP REQUEST        │
        └─────────────────┬───────────────────┘
                          │
                          ▼
        ┌─────────────────────────────────────┐ S43
        │   EXECUTE BEAM CONFIGURATION         │
        └─────────────────┬───────────────────┘
                          │
                          ▼
        ┌─────────────────────────────────────┐ S44
        │  DETERMINE BEAMS AND NUMBER OF       │
        │  BEAMS TO BE SIMULTANEOUSLY          │
        │  TRANSMITTED                         │
        └─────────────────┬───────────────────┘
                          │
                          ▼
                    ┌─────────────┐
                    │     END     │
                    └─────────────┘
```

[ FIG. 11 ]

FIG. 11

```
        ┌─────────┐
        │  START  │
        └────┬────┘
             │
             ▼
┌─────────────────────────────────┐ S51
│      RECEIVE AOA REPORT          │
└─────────────────┬───────────────┘
                  │
                  ▼
┌─────────────────────────────────┐ S52
│ CALCULATE BEAMS AND NUMBER OF    │
│ BEAMS Nb SATISFYING REQUIRED     │
│ QOS ON BASIS OF INERTIAL         │
│ INFORMATION AND AOA REPORT       │
└─────────────────┬───────────────┘
                  │
                  ▼
         IS COMMUNICATION CAPACITY C    S53
         BETWEEN COMPUTER REMOTE UNIT
         (RD) AND COMPUTER LOCAL UNIT
         SUFFICIENT TO TRANSMIT Nb           YES
         IMAGE INFORMATION IN IMAGE  ──────────────┐
         TRANSMISSION?                              │
                  │ NO                              │
                  ▼                                 ▼
┌────────────────────────────────┐ S55  ┌──────────────────────┐ S54
│ REDUCE NUMBER OF PIECES OF IMAGE│     │ DETERMINE NUMBER OF  │
│ INFORMATION TO BE TRANSMITTED IN│     │ PIECES IMAGE         │
│ IMAGE TRANSMISSION TO NUMBER    │     │ INFORMATION TO BE    │
│ TRANSMITTABLE WITHIN            │     │ TRANSMITTED IN IMAGE │
│ COMMUNICATION CAPACITY C        │     │ TRANSMISSION TO BE Nb│
└───────────────┬────────────────┘     └──────────┬───────────┘
                │                                  │
                ▼◄─────────────────────────────────┘
           ┌─────────┐
           │   END   │
           └─────────┘
```

34

[ FIG. 12 ]

FIG. 12

```
                    ┌─────────────┐
                    │    START    │
                    └──────┬──────┘
                           │
                           ▼
      ╱─────────────────────────────────╲  S61
     ╱    HAS SETUP REQUEST BEEN          ╲
     ╲    SENT FROM COMPUTER?             ╱──── NO ──┐
      ╲─────────────────────────────────╱           │
                           │ YES                     │
                           ▼                         │
      ┌─────────────────────────────────┐  S62       │
      │  EXECUTE BEAM CONFIGURATION      │           │
      └─────────────────┬───────────────┘           │
                        │                            │
                        ▼◄──────────────────────────┘
                    ┌─────────────┐
                    │     END     │
                    └─────────────┘
```

[ FIG. 13 ]

FIG. 13

```
                    ┌─────────────┐
                    │    START    │
                    └──────┬──────┘
                           │
                           ▼
      ╱─────────────────────────────────╲  S71
     ╱    HAS SETUP REQUEST BEEN          ╲
     ╲    SENT FROM HMD?                  ╱──── NO ──┐
      ╲─────────────────────────────────╱           │
                           │ YES                     │
                           ▼                         │
      ┌─────────────────────────────────┐  S72       │
      │  EXECUTE BEAM CONFIGURATION      │           │
      └─────────────────┬───────────────┘           │
                        │                            │
                        ▼                            │
      ┌─────────────────────────────────┐  S73       │
      │  DETERMINE BEAMS AND NUMBER OF   │           │
      │  BEAMS SIMULTANEOUSLY TRANSMITTED│           │
      └─────────────────┬───────────────┘           │
                        │                            │
                        ▼◄──────────────────────────┘
                    ┌─────────────┐
                    │     END     │
                    └─────────────┘
```

[ FIG. 14 ]

FIG. 14

```
                    ┌─────────────┐
                    │    START    │
                    └─────────────┘
                           │
                           ▼
         ╱─────────────────────────────────────╲  S81
        ╱  DETERMINE WHETHER HMD EXECUTES        ╲
        ╲  BEAM CONFIGURATION                    ╱ NO
         ╲─────────────────────────────────────╱
                           │ YES
                           ▼
        ┌──────────────────────────────────────┐ S82
        │  NOTIFY COMPUTER OF SETUP REQUEST     │
        └──────────────────────────────────────┘
                           │
                           ▼
        ┌──────────────────────────────────────┐ S83
        │  EXECUTE BEAM CONFIGURATION           │
        └──────────────────────────────────────┘
                           │
                           ▼
                    ┌─────────────┐
                    │     END     │
                    └─────────────┘
```

[ FIG. 15 ]

FIG. 15

[ FIG. 16 ]

FIG. 16

```
                    ( START )
                        |
                        v
      < COMPATIBLE WITH VR GAMING MODE? > S91 ────────────┐
                        |  NO                              |
                        | YES                              |
                        v                                  |
      ┌─────────────────────────────┐ S93                 |
      │ SELECT BEAMS TO BE           │                     |
      │ SIMULTANEOUSLY TRANSMITTED   │                     |
      └─────────────────────────────┘                     |
                        |                                  v
                        v                    ┌──────────────────────┐ S92
      ┌─────────────────────────────┐ S94    │ TRANSMIT IMAGE DATA   │
      │ PERFORM IMAGE CONVERSION ON  │        │ BY HIGH-QUALITY       │
      │ BASIS OF SELECTED BEAMS TO   │        │ COMMUNICATION BEAM    │
      │ GENERATE IMAGE DATA          │        └──────────────────────┘
      └─────────────────────────────┘                     |
                        |                                  |
                        v                                  |
      ┌─────────────────────────────┐ S95                 |
      │ TRANSMIT IMAGE DATA          │                     |
      │ BY RESPECTIVE BEAMS          │                     |
      └─────────────────────────────┘                     |
                        |                                  |
                        v <────────────────────────────────┘
                    (  END  )
```

[ FIG. 17 ]

FIG. 17

```
                    ┌─────────┐
                    │  START  │
                    └────┬────┘
                         │
                         ▼
        ◁COMPATIBLE WITH VR GAMING MODE?▷ S101
                         │          NO ─────────────────┐
                       YES                              │
                         │                              │
                         ▼                              │
          ┌──────────────────────────┐ S103            │
          │ GENERATE BEAM PATTERN     │                 │
          │ PRELIMINARILY DETERMINED  │                 │
          │ BETWEEN COMPUTER AND HMD  │                 │
          └────────────┬─────────────┘                 ▼
                       │                    ┌─────────────────────┐ S102
                       │                    │ RECEIVE IMAGE DATA   │
                       ▼                    │ BY HIGH-QUALITY      │
          ┌──────────────────────────┐ S104│ COMMUNICATION BEAM   │
          │ SELECT ONLY OPTIMAL BEAM  │     └──────────┬──────────┘
          │ FROM SIGNALS OF MULTIPLE  │                │
          │ BEAMS RECEIVED            │                │
          └────────────┬─────────────┘                │
                       │◄───────────────────────────────
                       ▼
          ┌──────────────────────────┐ S105
          │ DEMODULATE RECEIVED       │
          │ IMAGE DATA INTO IMAGE,    │
          │ AND DISPLAY THE IMAGE     │
          └────────────┬─────────────┘
                       │
                       ▼
                  ┌─────────┐
                  │   END   │
                  └─────────┘
```

[ FIG. 18 ]
FIG. 18

EP 4 068 267 A1

| TIME SLOT | $t_0$ | $t_1$ | $t_2$ | $t_3$ | $t_4$ | $t_5$ | $t_6$ | $t_7$ | $t_8$ |

COMPUTER ~22

ACQUIRED INERTIA INFORMATION OF HMD: $\theta(t_0)$ $\theta(t_1)$ $\theta(t_2)$ $\theta(t_3)$ $\theta(t_4)$ $\theta(t_5)$

IMAGE GENERATOR, ENCODER: IMAGE GENERATION | IMAGE CONVERSION | ENCODING

WIRELESS COMMUNICATOR
BEAM #1: #1-1 #2-1 ⋯ #k-1
BEAM #2: #1-2 #2-2 ⋯ #k-2
BEAM #N: #1-N #2-N ⋯ #k-N

Motion to Photon Latency

HMD ~21

HMD: #1-a #2-a ⋯ #k-m | RENDERING PROCESS | #1-a #2-a ⋯ #k-m

RECEIVE DATA REGARDING BEAM #a

RECEIVE DATA REGARDING BEAM #m

START DISPLAYING IMAGE

DISPLAY DATA REGARDING BEAM #a

DISPLAY DATA REGARDING BEAM #m

[ FIG. 19 ]
FIG. 19

EP 4 068 267 A1

COMPUTER                                                    HMD

Capability              ∿S111                           ⌐∙∙P1
────────────────────────────────────────────────────▶

            ∿S112                        Capability         Capability
◀────────────────────────────────────────────────────      Exchange

Setup Request           ∿S113                           ⌐∙∙P2
────────────────────────────────────────────────────▶

Beam Search             ∿S114
────────────────────────────────────────────────────▶
                                                            Beam
            ∿S115                        AoA Info           Configuration
◀────────────────────────────────────────────────────

Setting Report          ∿S116
────────────────────────────────────────────────────▶

Image Data(on Beam#1)           ⟋S117                   ⌐∙∙P3
────────────────────────────────────────────────────▶

Image Data(on Beam#n)                                       Multi-beam
────────────────────────────────────────────────────▶      Transmission

Ack Request             ∿S118
────────────────────────────────────────────────────▶

            ∿S119                            Ack
◀────────────────────────────────────────────────────

[ FIG. 20 ]

FIG. 20

```
                    ╭─────────╮
                    │  START  │
                    ╰────┬────╯
                         │
          ┌──────────────▼──────────────┐ S121
          │    RECEIVE AOA REPORT        │
          └──────────────┬──────────────┘
                         │
          ┌──────────────▼──────────────┐ S122
          │ CALCULATE BEAMS AND NUMBER OF│
          │ BEAMS Nb SATISFYING REQUIRED │
          │ QOS ON BASIS OF INERTIAL     │
          │ INFORMATION AND AOA REPORT   │
          └──────────────┬──────────────┘
                         │
               ╱─────────▼──────────╲ S123
              ╱ IS CALCULATION CAPACITY OF ╲
              ╲ COMPUTER SUFFICIENT TO     ╱
              ╲ TRANSMIT Nb IMAGE INFORMATION ╱ YES
               ╲ IN IMAGE TRANSMISSION? ╱
                ╲────────┬───────────╱
                      NO │
```

S125

REDUCE NUMBER OF PIECES OF IMAGE
INFORMATION TO BE TRANSMITTED IN
IMAGE TRANSMISSION TO NUMBER THAT
IS ABLE TO BE GENERATED WITH
COMPUTATIONAL PERFORMANCE OF
COMPUTER

S124

DETERMINE NUMBER OF
PIECES
OF IMAGE INFORMATION TO
BE TRANSMITTED IN IMAGE
TRANSMISSION TO BE Nb

END

[ FIG. 21 ]

FIG. 21

<table>
<tr><td colspan="3" align="center"><b>INTERNATIONAL SEARCH REPORT</b></td><td colspan="2">International application No.<br>PCT/JP2020/042200</td></tr>
</table>

| | |
|---|---|
| **A. CLASSIFICATION OF SUBJECT MATTER**<br>Int.Cl. G09G5/00(2006.01)i, H04N21/2343(2011.01)i, H04N21/239(2011.01)i<br>FI: H04N21/2343, H04N21/239, G09G5/00510G, G09G5/00555D, G09G5/00555A, G09G5/00550C<br>According to International Patent Classification (IPC) or to both national classification and IPC | |

**B. FIELDS SEARCHED**

Minimum documentation searched (classification system followed by classification symbols)
Int.Cl. G09G5/00, H04N21/2343, H04N21/239

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2017/0045941 A1 (SONY INTERACTIVE ENTERTAINMENT INC.) 16 February 2017 (2017-02-16), paragraphs [0072], [0073], [0097]–[0099], [0132], [0133], [0144]–[0147], fig. 1, 4 | 1–20 |
| A | US 2019/0068926 A1 (ADVANCED MICRO DEVICES, INC.) 28 February 2019 (2019-02-28), paragraphs [0019], [0020], [0030]–[0042], fig. 1–5 | 1–20 |
| A | US 2018/0234137 A1 (OCULUS VR, LLC) 16 August 2018 (2018-08-16), paragraphs [0025]–[0028], [0035], [0067]–[0095], fig. 2–5 | 1–20 |

☐ Further documents are listed in the continuation of Box C.     ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>25 January 2021 | Date of mailing of the international search report<br>02 February 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT
Information on patent family members

International application No.

PCT/JP2020/042200

| | | |
|---|---|---|
| US 2017/0045941 A1 | 16 February 2017 | JP 2020-503906 A<br>paragraphs [0079], [0080], [0104]-[0106], [0139], [0140], [0151]-[0154], fig. 1, 4<br>WO 2018/064627 A1<br>EP 3519066 A1<br>CN 109952135 A |
| US 2019/0068926 A1 | 28 February 2019 | (Family: none) |
| US 2018/0234137 A1 | 16 August 2018 | US 9866286 B1<br>US 10659110 B1<br>US 10326500 B1 |

Form PCT/ISA/210 (patent family annex) (January 2015)

**REFERENCES CITED IN THE DESCRIPTION**

**Patent documents cited in the description**

- JP 2018503114 W